(19) Europäisches Patentamt / European Patent Office / Office européen des brevets

(11) **EP 4 782 467 A1**

(12) **EUROPEAN PATENT APPLICATION**

(43) Date of publication:
29.07.2026 Bulletin 2026/31

(21) Application number: 26153722.9

(22) Date of filing: 23.01.2026

(51) International Patent Classification (IPC):
$C08F\ 8/50$ $^{(2006.01)}$ $C08L\ 53/02$ $^{(2006.01)}$
$C08F\ 8/46$ $^{(2006.01)}$ $C08F\ 8/42$ $^{(2006.01)}$
$C08L\ 23/20$ $^{(2025.01)}$

(52) Cooperative Patent Classification (CPC):
(C-Sets available)
**C08L 53/025; C08F 8/42; C08F 8/46; C08F 8/50;
C08L 23/20; C08L 91/00;** C08F 2810/10;
C08L 2205/025; C08L 2205/03          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 24.01.2025 US 202563749032 P

(71) Applicant: **Kraton Polymers Nederland B.V.
1322 CE Almere (NL)**

(72) Inventors:
• **MUYLDERMANS, Xavier
Houston, 77084 (US)**
• **SUN, Tom
Houston, 77084 (US)**
• **MA, Biao
Houston, 77084 (US)**
• **NIU, Yaming
Houston, 77084 (US)**
• **LI, Chunfa
Houston, 77084 (US)**

(74) Representative: **Henkel & Partner mbB
Patentanwaltskanzlei, Rechtsanwaltskanzlei
Maximiliansplatz 21
80333 München (DE)**

(54) **HIGH MELT FLOW HYDROGENATED STYRENIC BLOCK COPOLYMERS**

(57)     A visbroken hydrogenated styrenic block copolymer (m-HSBC) is provided. The m-HSBC includes at least one vinyl-aromatic block "S" and at least one rubbery block "R" derived from hydrogenated diene units. It is produced by controlled chain scission of a HSBC precursor. The chain-scission process forms lower-molecular-weight species and increases melt flow rate (MFR). The m-HSBC has a GPC major peak molecular weight ($M_p$) of 10 - 200 kg/mol, a residual unsaturation (RU) of up to 0.5 meq/g, and a melt flow rate (MFR) of 10 - 2000 g/10 min at 190°C/2.16 kg. The m-HSBC can be functionalized with anhydride, epoxy, silane, or (meth) acrylate groups. The m-HSBC or functionalized m-HSBC provides high MFR, good elasticity, and improved substrate wetting. The materials are suitable for use in adhesives, sealants, coatings, CCL, and other melt-processed applications.

Ratio:12%

FIG. 1

EP 4 782 467 A1

(52) Cooperative Patent Classification (CPC): (Cont.)

C-Sets
**C08F 8/42, C08F 8/50, C08F 8/04, C08F 297/04;**
**C08F 8/46, C08F 8/50, C08F 8/04, C08F 297/04;**
**C08F 8/50, C08F 8/04, C08F 297/04;**
**C08K 5/09, C08L 53/025;**
**C08K 5/14, C08L 53/025;**
**C08L 23/20, C08L 23/20, C08L 53/025;**
**C08L 53/025, C08L 53/025;**
**C08L 91/00, C08L 53/025, C08L 23/12**

**Description**

**TECHNICAL FIELD**

The disclosure relates to high melt flow hydrogenated styrenic block copolymers and compositions thereof.

**BACKGROUND**

Hydrogenated styrenic block copolymers (HSBCs) are widely used in a variety of applications, e.g., as polymeric additives for rubbers and thermoplastic compositions with a combination of elasticity, strength, and chemical resistance. However, a continuing challenge is achieving a high melt flow rate (MFR) at elevated temperatures (e.g., 150°C) without the use of plasticizers, while maintaining a rubbery consistency and a solid form at usage or storage temperatures. High MFR HSBCs are desirable in solid form for blending with rubbers, e.g., polyisobutylene (PIB), polyolefins, etc. In addition, high MFR HSBCs are of interest for use in copper-clad laminate (CCL) and related electronic applications.

One approach is to produce a low molecular weight HSBC. However, such materials often fail to achieve the desired high MFR or are in liquid form. A lack of sufficient MFR, or the inability to remain in solid form, can limit applicability in processes that require solid materials. Another alternative is to use high MFR polypropylene (PP), but this material is typically rigid and crystalline and therefore lacks the essential rubbery properties. Likewise, amorphous poly-alpha-olefins (APAOs) and low molecular weight rubbers are often liquid or form agglomerated bales, creating handling and processing challenges.

There is still a need for a high MFR polymer with a balanced elasticity and strength that is compatible with other polymer systems.

**SUMMARY**

In one aspect, the disclosure relates to a visbroken hydrogenated styrenic block copolymer (visbroken HSBC) comprising at least one block "S" composed of vinyl aromatic units, and at least one block "R" composed of hydrogenated diene units. The diene units have a hydrogenation level > 50%, measured by $^1$H NMR. The visbroken HSBC is characterized by: a Low Mw Broadness Index (LMBI) $\geq$ 25%; a GPC major peak molecular weight ($M_p$) of 10 - 200 kg/mol, measured according to ASTM D5296; a GPC molecular weight ($M_p$) of block "S" of 3 - 20 kg/mol, measured according to ASTM D5296; a residual unsaturation (RU) of up to 0.5 meq/g, measured by $^1$H NMR; a tan $\delta$ peak temperature of -42 to 20°C, measured by dynamic mechanical analysis; an aliphatic methyl proton index (AlMPI) of 18 - 45%, determined by $^1$H NMR; and a melt flow rate (MFR) of 10 - 2000 g/10 min, or preferably 10 - 400 g/10 min, or more preferably 10 - 250 g/10 min, at 190°C with a 2.16 kg load, measured according to ASTM D1238.

In a second aspect, the visbroken HSBC has at least one of: aromatic proton contents from 1 to 30%; an aromatic blocky proton index (ArBPI) of 10 to 50%; and an aliphatic methyl proton index (AlMPI) of 23 to 40%; all properties are measured by $^1$H NMR.

In a third aspect, the disclosure relates to a sealant composition comprising, consisting essentially of, or consisting of: (a) 5 - 40 wt.% of the visbroken HSBC; (b) 25 - 90 wt.% of polyisobutylene; (c) 0 - 30 wt.% of a polyolefin; (d) 0 to 60 wt.% of filler; and (e) 0 to 15 wt.% of additives, based on total weight of the sealant composition. The polyolefin can be selected from the group consisting of amorphous polyalphaolefins (APAO), polyethylene, polypropylene, polyolefin elastomers, ethylene-alpha-olefin copolymers, and mixtures thereof.

In a fourth aspect, the disclosure also relates to curable resin composition comprising, consisting essentially of, or consisting of: (a) 10 - 90 wt.% of the visbroken HSBC; (b) 20 - 90 wt.% of a resin; (c) 0 - 70 wt.% of filler; and (d) 0 to 30 wt.% of an additive, based on total weight of the curable resin composition. The resin can be selected from the group consisting of epoxy resins, polyphenylene ether resins, cyanate ester resins, benzoxazine resins, phenolic resins, vinyl ester resins, bismaleimide resins, polyester resins, polyamide resins, ionomer resins, aromatic resins, and combinations thereof. The additive, if added, can be selected from the group consisting of fillers, curing agents, catalysts, flame retardants, coupling agents, processing aids, stabilizers, and mixtures thereof.

**DRAWING DESCRIPTION**

FIG. 1 is a schematic representation of a GPC graph showing the low molecular weight broadness index (LMBI) for an embodiment of HSBC precursor before visbreaking.

FIG. 2 is a schematic representation of a GPC graph showing the LMBI for a visbroken HSBC made from the HSBC precursor in FIG. 1.

**DESCRIPTION**

The following terms will be used throughout the specification.

"Consisting essentially of' means that the claimed composition primarily contains the specified materials, with allowances for additional components that do not materially affect novel characteristics or function of the claimed invention, with the additional components, if present, in an amount of < 30%, or < 20%, or < 10%.

"At least one of A, B, and C" means one or more members selected from the group consisting of A, B, and C. Thus, it includes A only, B only, C only, A and B, A and C, B and C, and A, B, and C.

A list of embodiments recited as "A, B, or C" is interpreted to include A only, B only, C only, or any combination of two or more of A, B, and C, unless the context clearly indicates otherwise.

"Any of A, B, or C" means one member selected from A, B, and C.

If used, "any of A, B, and C" means one or more members selected from A, B, and C, and is intended to have the same scope as "at least one of A, B, and C."

"Vinyl aromatic unit content" or VAC of a block copolymer refers to the weight % of polymerized vinyl aromatic monomers, e.g., styrene, para-methylstyrene, etc., in the block copolymer, calculated by dividing the sum of molecular weight of all vinyl aromatic units by total molecular weight of the block copolymer. VAC can be determined using proton nuclear magnetic resonance spectroscopy ($^1$H NMR) and $^{13}$C NMR. VAC sometimes is used interchangeably with polystyrene content (PSC).

"Butylene unit content" refers to the content, in weight %, of the butylene units ("B") relative to all diene based units in a given polymer (e.g., hydrogenated block copolymer). The butylene units are formed through the polymerization of 1,3-butadiene monomer via 1,2-addition, followed by hydrogenation. The 1,3-butadiene monomer can also polymerize through 1,4-addition, which, upon hydrogenation, results in ethylene units ("E"). Both butylene and ethylene units can be present in the hydrogenated block copolymer, which can also contain vinyl aromatic units and/or other units derived from conjugated diene monomers, arranged in any order. The butylene unit content can be measured by $^1$H NMR and $^{13}$C NMR.

"Molar mass" or $M_m$ refers to the mass of one mole of a specific substance, expressed in kg/mol.

"Polystyrene apparent molecular weight" or Ms refers to the molecular weight in kg/mol of a polymer or copolymer, as measured by gel permeation chromatography (GPC) calibrated with polystyrene standards, in accordance with ASTM D5296. The GPC detector may be an ultraviolet detector, a refractive index detector, or a combination thereof. A polymer or copolymer having a given Ms exhibits the same GPC elution time as a polystyrene standard having the same molecular weight. Unless otherwise specified, molecular weight values recited herein refer to the GPC peak molecular weight (Mp) corresponding to the apex of a given polymeric peak.

"GPC major peak molecular weight" refers to the Mp of the peak with the highest detected intensity among all the GPC peaks corresponding to polymeric species. Each block copolymer as measured in GPC has several Mp's but has only one GPC major peak molecular weight, the major peak being selected from polymeric peaks having a GPC peak molecular weight above 5 kg/mol.

"$M_p$ of a block segment" in a block copolymer refers to the GPC molecular weight corresponding to polymer chains or chain segments comprising the monomer units of that block. For block copolymers, the $M_p$ of a given block may be determined from a gel permeation chromatography (GPC) analysis conducted in accordance with ASTM D5296, using calibration with polystyrene standards, by identifying a GPC signal attributable to the monomer units of the block. Such identification may be carried out using a detector selective for the monomer units of the block, such as an ultraviolet (UV) detector for vinyl aromatic blocks, optionally in combination with a refractive index detector. For example, for a styrenic block "S," the $M_p$ corresponds to the apex of the styrenic-derived GPC peak. In embodiments, individual GPC block molecular weight can be calculated by the difference of $M_p$ measured before and after the considered block polymerization. For example, molecular weight of block "S" is the $M_p$ of species S-R minus the $M_p$ of block "R."

A "block" (e.g., block "R" or block "S") refers to a polymer segment that is defined by the predominant chemical units intentionally incorporated into that segment and responsible for its characteristic properties. Thus, a block designated as E/B, EP/MB, E/B/S, or the like comprises primarily the listed units, but may also contain minor amounts of other units arising from polymerization, hydrogenation, catalyst selectivity, monomer feed composition, or subsequent chemical modification. Such minor units may include non-hydrogenated units, partially hydrogenated units, isomerized units, or residual vinyl aromatic units, provided that they do not materially alter the defining characteristics of the block. The slash-separated ("/") block designations are used solely to identify the principal unit types present and do not imply a specific sequence, ordering, or compositional ratio unless expressly stated.

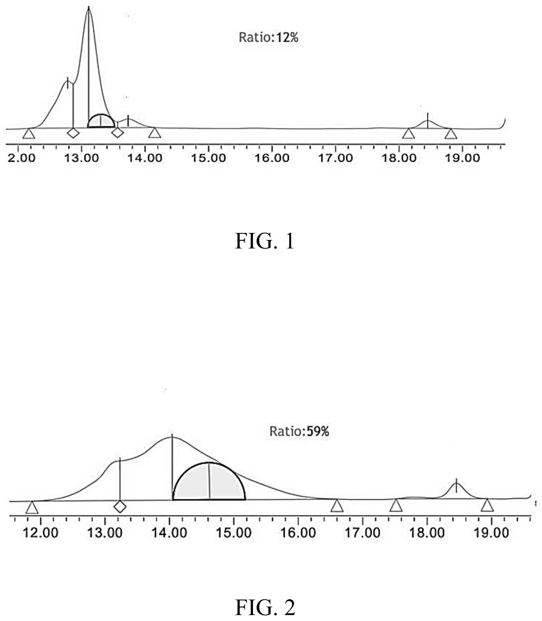

"LMBI" or "Low Mw Broadness Index" represents the relative presence of a broad variety of low-molecular-weight polymeric chains compared to the most represented polymer species as visible in a gel permeation chromatography (GPC) trace obtained using a refractive index detector. To determine the LMBI: 1) identify the highest polymer peak in the GPC chromatogram (the GPC major peak molecular weight Mp) and draw a vertical line passing through its maximum height; 2) draw the largest half-circle whose arc lies entirely below the GPC curve on the low-molecular-weight side of the vertical line; 3) measure the height of the half-circle, i.e., its radius. The LMBI is calculated as the ratio of the circle's radius to the height of the highest peak. FIGS. 1 and 2 illustrate the LMBI for a HSBC precursor and a visbroken HSBC (made from the HSBC precursor), respectively.

"Visbroken hydrogenated styrenic block copolymer" or "visbroken HSBC" refers to a HSBC that has undergone controlled polymer chain scission, meaning the breaking or cleaving of covalent bonds within the polymer backbone, branched chains, pendant groups, or grafted polymer chains under conditions that generate free radicals or other reactive species capable of altering the polymer's molecular-weight distribution. The visbroken HSBC is distinguished from a precursor (non-visbroken) HSBC by measurable changes in molecular-weight distribution, including a Low Mw Broadness Index (LMBI) greater than or equal to ($\geq$) 25%, with the LMBI value being subject to a measurement tolerance of $\pm$ 2% points, as determined herein, and by corresponding changes in *melt-flow behavior,* chain-end concentration, and dynamic-mechanical properties associated with controlled chain scission. Visbroken HSBC may be interchangeably termed as m-HSBC or modified HSBC.

"HSBC" refers to a hydrogenated styrenic block copolymer. The HSBC is a hydrogenated form of an unhydrogenated styrenic block copolymer (USBC). HSBC are selectively hydrogenated when a substantial proportion (e.g., > 50%) of one type of unsaturated bonds, usually olefinic bonds originating from the conjugated diene units, are hydrogenated, while most (e.g., > 90%) of other unsaturated bonds, usually aromatic bonds, are non-hydrogenated. In the present disclosure, the term "HSBC" includes the hydrogenated polymer in its isolated form prior to visbreaking (also referred to herein as an "HSBC precursor"), which corresponds to the polymer product obtained after removal of solvent by methods such as steam stripping, drying, etc. The resulting product, after solvent removal can be processed to obtain product forms such as pellets, extrudates, or flakes; or can be further modified to form a visbroken HSBC through controlled polymer chain scission.

"Hydrogenation level" refers to the level (in %) of saturation of the double bonds (e.g., olefinic, aromatic, etc.) in a block copolymer, can be measured by $^1$H NMR.

"Residual unsaturation" or "RU" refers to the level of olefinic unsaturation, i.e., carbon-carbon double bonds of a block copolymer, expressed in milliequivalent per gram (meq/g). One equivalent here is one mole of olefinic double bonds. RU can be measured using $^1$H NMR or ozonolysis titration.

"Unit" refers to the structural building block derived from one monomer following its polymerization, representing a repeating entity that forms part of the polymer or copolymer chain. Unlike a "monomer," which is the individual molecule before polymerization, a "unit" is the transformed version of the monomer after undergoing the polymerization process. A polymerized unit can be further transformed into a hydrogenated unit or a functionalized unit.

"Coupling efficiency" or "CE" refers to the weight of coupled polymer molecules divided by the total weight of both coupled and uncoupled polymer molecules, expressed as a percentage (%). CE can be used to determine the amount of diblock or more generally of "uncoupled arms" content in the overall block copolymer. For example, if the coupling efficiency is 80%, the polymer will contain 20 wt.% diblock or uncoupled arms and 80 wt.% triblock and multi-arm species.

"Polydispersity index" or "PDI" refers to a ratio of a weight average molecular weight ($M_w$) to a number average molecular weight ($M_n$), sometimes also called as molecular weight distribution. PDI is used to indicate distribution of polymer chain molecular weights in a given polymer. The PDI can be calculated over the total GPC, or a fraction of the GPC such as a peak between two extreme apparent molecular weight values.

"Tangent Delta" or tan delta or tan D or tan $\delta$ refers to the ratio between the loss modulus and the elastic modulus. Tan $\delta$ is also referred to as damping factor, dissipation factor or loss factor, commonly used as a measure of the damping in a viscoelastic system. Tan $\delta$ value can be measured by DMA (Dynamic Mechanical Analysis).

"Tan $\delta$ peak maximum" or tan $\delta$ max refers to the local maximum of the damping factor of a material, as measured by DMA. In a DMA test, the tan $\delta$ of the material is recorded over a range of temperatures, resulting in several broad peaks within the measured temperature range. Each of these peaks has a maximum value, referred to as "tan $\delta$ peak maximum."

"Tan $\delta$ peak temperature" or T (tan $\delta$ max) refers to the temperature at which the maximum of the tan $\delta$ peak is observed, measured at 10 rad/s.

"Aromatic blocky proton index" or ArBPI refers to a fraction, expressed as a percentage, of aromatic protons that are blocky in the total aromatic protons of a block copolymer. The ArBPI can be measured by $^1$H NMR and is computed by equation:

$$ArBPI\,(\%) = 100\% * \frac{\text{Integral2}}{\text{Integral1}}$$

where Integral1 is obtained by integrating the $^1$H NMR spectrum from 7.5 ppm to 6.0 ppm; and Integral-2 is obtained by integrating the $^1$H NMR spectrum from the signal minimum in the region between 6.9 ppm and 6.6 ppm, to 6.0 ppm.

"Aromatic proton contents" refer to the protons (expressed as a percentage of all protons) attached to aromatic carbon atoms within an aromatic ring structure. In $^1$H NMR, aromatic protons typically resonate within the chemical shift range of 7.5 to 6.0 ppm.

"Aliphatic methyl proton index" or AlMPI refers to a fraction, expressed as a percentage, of aliphatic protons that belong to methyl groups attached to an aliphatic carbon, relative to the total aliphatic protons in a block copolymer. The AlMPI can be measured by $^1$H NMR and is computed by equation:

$$AlBPI\ (\%) = 100\% * \frac{\text{Integral4}}{\text{Integral3}}$$

where Integral3 is obtained by integrating the $^1$H NMR spectrum from 2.99 ppm to 0.4 ppm; and Integral4 is obtained by integrating the $^1$H NMR spectrum from the signal minimum in the region between 1.0 ppm and 0.8 ppm, to 0.4 ppm.

"Complex modulus" or G* of a block copolymer is a material property that characterizes the polymer's resistance to deformation under oscillatory shear stress, measured by DMA.

"Gel content" refers to the fraction of a visbroken HSBC that remains insoluble after immersion in toluene, expressed as weight percentage (wt.%) of the visbroken HSBC prior to immersion. In embodiments, the gel content is < 10, or < 5, or < 1, or > 0.01 wt.%, corresponding to dissolution of > 90, or > 95, or > 99 wt.% of the visbroken HSBC in toluene.

"Gel Content Test" refers to the determination gel content by placing a known weight of visbroken HSBC (G1) in a volume of toluene equal to 20 times the sample volume at room temperature (e.g., 25°C) for a period sufficient to reach equilibrium, for example about 24 hours. The mixture is then filtered to recover the insoluble fraction, which is dried to remove solvent and weighed to obtain the insoluble content weight (G2). Gel content is calculated as: 100% x (G2 / G1) and reported as wt.%.

The disclosure relates to a visbroken hydrogenated styrenic block copolymer (visbroken HSBC) obtained through controlled polymer chain scission of a HSBC precursor and, in certain embodiments, to a functionalized visbroken HSBC (f-m-HSBC) derived therefrom. The resulting visbroken HSBC exhibits an increased MFR and an optimized balance of elasticity and storage stability, thereby effectively minimizing cold flow. The visbroken HSBC is suitable for incorporation into various compositions, such as polyolefins, rubbers, and other polymer systems, to improve processability, rubberiness, or adhesion.

(Visbroken Hydrogenated Styrenic Block Copolymers): The visbroken HSBC is produced by subjecting a HSBC precursor to controlled polymer chain scission. In embodiments, the HSBC precursor is a linear, radial, or branched block copolymer comprising at least one block "S" composed of vinyl aromatic units and at least one rubbery block "R" (block "R") composed of hydrogenated diene units, wherein the block R optionally containing vinyl aromatic units. The HSBC precursor can have any of diblock, triblock, tetrablock, pentablock, and higher-order block structure, or mixtures thereof. The vinyl aromatic units are derived from polymerized vinyl aromatic monomers, while the hydrogenated diene units, prior to hydrogenation, are derived from polymerized conjugated diene monomers.

During the chain-scission process, covalent bonds within the HSBC precursor are cleaved, resulting in a redistribution of molecular weight and formation of shorter polymer chains for a visbroken HSBC with increased melt flow rate.

In embodiments, each block "S" of the HSBC precursor has a GPC molecular weight ($M_p$) of $\leq 20$, or < 18, or < 15, or > 2, or > 3, or 3 - 25, or 3 - 18, or 5 - 15, or 4 - 15, or 3 - 15, or 4 - 10, or 3 - 9, or 3 - 18 kg/mol. This means that if the HSBC precursor has multiple "S" blocks, each and every block "S" has a GPC molecular weight ($M_p$) of less or equal to 20 kg/mol.

In embodiments, the HSBC precursor has a GPC major peak molecular weight ($M_p$) of 10 - 210, or 10 - 200, or 20 - 150, or 30 - 100, or 10 - 140, or 10 - 100, or 40 - 120, or > 25, or < 210, or < 200 kg/mol.

In embodiments, the visbroken HSBC is derived from a HSBC precursor having linear or branched (multi-arm) structure selected from: S-R, (S-R)$_n$X, S-R-S, S-R-S-R, R-S-R-S-R, (R-S-R)$_n$X, S-R-S-R-S, (S-R-S)$_n$X, and mixtures thereof; where n is an integer from 2 to 30, or 2 to 20, or 2 to 10, and X is a residue of a coupling agent.

In embodiments, each block "R" is selected from E/B, E/B/S, EP/MB, EP/MB/S, E/B/EP/MB, and combinations thereof.

In embodiments, block "R" in the form of E/B contains ethylene ("E") units and butylene ("B") units, corresponding to hydrogenated 1,4-butadiene and hydrogenated 1,2-butadiene units, respectively. The ethylene ("E") unit content can be < 55, or < 40, or < 30, or > 10 wt.%, based on total weight of the block "R."

In embodiments, block "R" in the form of E/B/S contains ethylene ("E") units, butylene ("B") unit, and vinyl aromatic units. The ethylene ("E") units can be < 55, or < 40, or < 30, or > 10 wt.%, based on the combined weight of the "E" and "B" units.

In embodiments, block "R" in the form of EP/MB contains ethylene-propylene (EP) units and methyl-butylene (MB) units, where each EP unit corresponds to a hydrogenated 1,4-isoprene unit and each MB unit corresponds to a hydrogenated 3,4-isoprene and/or a hydrogenated 1,2-isoprene unit. The MB unit content can be > 5, or > 10, or > 25, or > 40, or < 70 wt.%, based on total weight of the block "R."

In embodiments, block "R" in the form of EP/MB/S contains EP units, MB units, and vinyl aromatic units. The MB units content can be > 5, or > 10, or > 25, or > 40, or < 70 wt.%, based on total weight of the EP and MB units.

In embodiments, block "R" in the form of E/B/EP/MB contains ethylene ("E") units, butylene ("B") units, EP units, and MB units. The ethylene ("E") unit content can be < 55, or < 40, or < 30, or > 10 wt.%, based on total weight of the block "R."

In embodiments, the coupling agent used to prepare multiblock HSBC precursors includes bi- or polyfunctional compounds, for example divinylbenzene, halides of aliphatic or araliphatic hydrocarbons (e.g., 1,2-dibromoethane, bis(chloromethyl)benzene), silicon tetrachloride, dialkyl- or diarylsilicon dichloride, alkyl- or arylsilicon trichloride, tin tetrachloride, alkylsilicon methoxides, alkyl silicon ethoxides, polyfunctional aldehydes, ketones, esters, anhydrides, epoxides, and mixtures thereof. In embodiments, the coupling agent is selected from methyltrimethoxysilane, methyltriethoxysilane, tetramethoxysilane, dimethyladipate, gamma-glycidoxypropyltrimethoxy silane, and mixtures thereof.

In embodiments, the vinyl aromatic monomer is selected from the group consisting of styrene, para-methylstyrene, para-ethylstyrene, para-n-propylstyrene, para-iso-propylstyrene, para-n-butylstyrene, para-sec-butylstyrene, para-iso-butylstyrene, para-t-butylstyrene, isomers of para-decylstyrene, isomers of para-dodecylstyrene, ortho-substituted styrene, meta-substituted styrene, alpha-methylstyrene, 1,1-diphenylethylene, and mixtures thereof.

In embodiments, the conjugated diene monomer is selected from the group consisting of isoprene, 1,3-butadiene, 2,3-dimethyl-1,3-butadiene, 1-phenyl-1,3-butadiene, 1,3-pentadiene, 1,3-hexadiene, 3-butyl-1,3-octadiene, farnesene, myrcene, piperylene, cyclohexadiene, and mixtures thereof.

In embodiments, each block "S" has a hydrogenation level of < 30%, or < 20%, or < 10%, or < 5%, based on total aromatic double bonds. In embodiments, diene units in each block "R" have a hydrogenation level of > 50%, or > 55%, or > 60%, or > 65%, or > 90%, or > 95%, or > 98%, or > 99% or < 90%, or 50 - 98%, or 50 - 90%, or 55 - 85%, or 60 - 80%, or 65 - 90%, or 50 - 75%.

The visbroken hydrogenated styrenic block copolymer comprises the same types of block architectures as the HSBC precursor including diblock and triblock species, forming new species with reduced molecular weight. Examples of visbroken HSBC structures include diblock, triblock, and multiblock architectures derived from S and R blocks, such as S-E/B, S-EP/MB, S-E/B/EP/MB, S-E/B/S, S-EP/MB/S, and their coupled or extended forms including (S-E/B)$_n$X, (S-EP/MB)$_n$X, (S-E/B/EP/MB)$_n$X, (S-E/B/S)$_n$X, (S-EP/MB/S)$_n$X, S-E/B-S, S-EP/MB-S, S-E/B/EP/MB-S, S-E/B/S-S, S-EP/MB/S-S, (S-E/B-S)$_n$X, (S-EP/MB-S)$_n$X, (S-E/B/EP/MB-S)$_n$X, (S-E/B/S-S)$_n$X, (S-EP/MB/S-S)$_n$X, and multiblock sequences such as S-E/B-S-E/B, S-EP/MB-S-EP/MB, S-E/B/EP/MB-S-E/B/EP/MB, S-E/B/S-S-E/B/S, S-EP/MB/S-S-EP/MB/S, S-E/B-S-E/B-S, S-EP/MB-S-EP/MB-S, S-E/B/EP/MB-S-E/B/EP/MB-S, S-E/B/S-S-E/B/S-S, S-EP/MB/S-S-EP/MB/S-S, E/B-S-E/B-S-E/B, EP/MB-S-EP/MB-S-EP/MB, E/B/EP/MB-S-E/B/EP/MB-S-E/B/EP/MB, E/B/S-S-E/B/S-S-E/B/S, EP/MB/S-S-EP/MB/S-S-EP/MB/S, and their coupled analogs including (E/B-S-E/B)$_n$X, (EP/MB-S-EP/MB)$_n$X, (E/B/EP/MB-S-E/B/EP/MB)$_n$X, (E/B/S-S-E/B/S)$_n$X, (EP/MB/S-S-EP/MB/S)$_n$X, as well as mixtures thereof. In these structures, n is an integer from 2 to 30 and X is a residue of a coupling agent.

In embodiments, when the visbroken HSBC contains blocks such as E/B, E/B/EP/MB, or E/B/S, the butylene unit ("B") content is from 60 - 90 wt.%.

In embodiments, the visbroken HSBC has a structure selected from (S-E/B)$_n$X, or (S-E/B/S)$_n$X, or (S-EP/MB)$_n$X, with a RU of 0.001 - 0.3 meq/g.

In embodiments, the visbroken HSBC comprises mixtures of diblock species and multiblock species. The diblock fraction can be 3 - 90, or 10 - 90, or 35 - 85, or 40 - 70, or 45 - 65, or 30 - 65, or 45 - 80, or 5 - 20, or > 3, or > 30, or < 80 wt.%. The multiblock fraction can be 10 - 80, or 15 - 65, or 30 - 60, or 35 - 55, or 35 - 70, or > 20, or < 70 wt.%, based on total weight of the visbroken HSBC.

In embodiments, the visbroken HSBC has a coupling efficiency (CE) of > 10%, or > 20%, or 10 - 100%, or 20 - 95%, or 70 - 95%, or > 90%, or 80 - 98%, or 85 - 95%.

In embodiments, the visbroken HSBC has a residual unsaturation (RU) of up to 0.5, or 0 - 0.4, or 0 - 0.2, or 0.001 - 0.1, or < 0.4, or < 0.3, or < 0.2, or < 0.1, or > 0.001 meq/g.

In embodiments, the visbroken HSBC has a butylene unit ("B") content of > 5, or > 30, or > 40, or > 45, or > 50, or > 60, or > 70, or < 95, or 5 - 95, or 30 - 95, or 45 - 95, or 50 - 90, or 60 - 85, or 60 - 90, or 45 - 85 wt.%, based on weight of the visbroken HSBC.

In embodiments, the visbroken HSBC has a total VAC of < 70, or < 60, or < 55, or > 10, or 5 - 70, or 5 - 60, or 10 - 55, or 15 - 50, or 35 - 55, or 15 - 35, or 18 - 40 wt.%, based on total weight of the visbroken HSBC.

In embodiments, the visbroken HSBC has a GPC major peak molecular weight ($M_p$) of 10 - 210, or 10 - 200, or 20 - 150, or 30 - 100, or 10 - 140, or 10 - 100, or 40 - 120, or > 25, or < 210, or < 200 kg/mol.

In embodiments, after visbreaking, the GPC molecular weight ($M_p$) of at least one block "S" in the visbroken hydrogenated styrenic block copolymer remains within ± 20% of the GPC molecular weight ($M_p$) of the corresponding block "S" in the HSBC precursor, and in further embodiments within ± 10%, and in still further embodiments within ± 5%, indicating that chain scission occurs predominantly within non-styrenic portions of the polymer. In embodiments, at least one block "S" in the visbroken HSBC has a GPC molecular weight ($M_p$) of < 20, or < 18, or < 15, or > 2, or > 3, or 3 - 25, or 3 - 18, or 5 - 15, or 4 - 15, or 3 - 15, or 4 - 10, or 3 - 9, or 3 - 18 kg/mol.

In embodiments, the visbroken HSBC has an aliphatic methyl proton index (AIMPI) of 18 - 45%, or 20 - 42%, or 23 - 40%, or 18 - 38%, or 20 - 35%, or 30 - 45%, or > 18%, or > 23%, or < 45%.

In embodiments, the visbroken HSBC has aromatic proton contents from 1 - 30%, or 1 - 20%, or 5 - 25%, or 3 - 15%, or 4 - 18%.

In embodiments, the visbroken HSBC has an aromatic blocky proton index (ArBPI) of 10 - 100%, or 10 - 50%, or 15 - 45%, or 18 - 42%, or 18 - 50%, or 10 - 42%, or > 18%, or < 45%, or < 100%.

In embodiments, chain scission during visbreaking occurs predominantly within the rubbery block "R," including within butylene units, EP units, or MB units, rather than within styrenic segments. Such preferential scission within rubbery segments facilitates molecular weight reduction while substantially preserving styrenic block integrity.

As a result of chain scission within rubbery segments, the visbroken hydrogenated styrenic block copolymer exhibits a redistribution of molecular weight characterized by an increased population of lower-molecular-weight species and a reduced population of higher-molecular-weight species. Because scission occurs in a largely statistical manner along the polymer backbone, the resulting molecular weight distribution is broadened, as reflected by an increased Low Mw Broadness Index (LMBI). In embodiments, the visbroken HSBC has a LMBI of > 25%, or > 30%, or > 40%, or > 45%, or > 50%, or > 55%, or > 60%, or < 90%, or < 100%, or 25 - 90%, or 30 - 80%, or 30 - 75%, or 35 - 65%.

In embodiments, the visbroken HSBC exhibits an increase in LMBI of at least 5%, or at least 10%, or at least 15%, or at least 20%, relative to the HSBC precursor.

In embodiments, chain scission also produces a corresponding increase in melt flow rate (MFR). Prior to scission, the HSBC precursor can have a MFR of 0.1 - 200, or 0.5 - 200, or 1 - 100, or 2 - 60, or 5 - 50, or > 2, or < 200, or < 100 g/10 min at 190°C with 2.16 kg load, measured according to ASTM D1238. After visbreaking, the MFR of the visbroken HSBC is even higher than the MFR of the precursor, at least 5% higher, or at least 10% higher, or at least 20% higher, or at least 50% higher, or at least 100% higher, e.g., for an MFR of 10 - 2000, or 10 - 1500, or 15 - 500, or 50 - 250, or 10 - 400, or 10 - 250 or > 5, or > 10, or > 100, or < 2000 g/10 min at 190°C with 2.16 kg load, measured according to ASTM D1238.

In embodiments, the visbroken HSBC has a total VAC of 10 - 55 wt.%; a $M_p$ of block "S" of 4 - 15 kg/mol; a GPC major peak $M_p$ of 40 - 150 kg/mol; and a MFR of 15 - 500 g/10 min at 190°C/2.16 kg.

(Optional Functionalizing Agents): In embodiments, the visbroken HSBC is reacted with at least one functionalizing agent to obtain a functionalized visbroken HSBC. In embodiments, a visbroken and functionalized HSBC ("f-m-HSBC") is obtained by: (i) functionalizing an visbroken HSBC, (ii) visbreaking a functionalized HSBC, or (iii) simultaneously performing visbreaking and functionalization of HSBC precursor under melt-reactive or solid-state conditions.

In embodiments, the functionalizing agents are compounds containing a styrenic aromatic group and at least one functional substituent capable of radical grafting or post-grafting reaction. Examples include p-styryltrimethoxysilane, p-styryltriethoxysilane, methacryloxy-functional styrenes, glycidyl-functional styrenes, amino-functional styrenes, and mixtures thereof. Non-functional styrenic monomers (e.g., para-methylstyrene, para-ethylstyrene, alpha-methylstyrene) are not functionalizing agents within the present invention unless derivatized to include a reactive functional group.

In embodiments, the functionalizing agents are acrylate-type agents, such as functional (meth)acrylates capable of introducing a polar or reactive group onto the polymer backbone. Such agents include methacrylic acid, acrylic acid, glycidyl acrylate, glycidyl methacrylate, 2-hydroxyethyl(meth)acrylate, hydroxypropyl(meth)acrylate, dimethylaminoethyl methacrylate, methacrylamide, alkyl(meth)acrylamides, and mixtures thereof. Non-functional acrylates (e.g., methyl acrylate, ethyl acrylate, butyl acrylate) can also be used for graft modification but do not introduce a functional group unless otherwise derivatized. In embodiments, both functional and non-functional acrylates can be included to adjust polarity, compatibility, or reactivity during grafting.

Examples of silane functionalizing agents include vinyltrimethoxysilane (VTMOS), vinyltriethoxysilane (VTEOS), vinyltributoxysilane, vinyldimethoxyethoxysilane, vinyldimethoxybutoxysilane, vinyldiethoxybutoxysilane, allyltrimethoxysilane, allyltriethoxysilane, methacryloxypropyltrimethoxysilane, methacryloxypropyltriethoxysilane, diethoxymethylvinylsilane, and mixtures thereof. Silane-functional styrenic agents (e.g., p-styryltrimethoxysilane, p-styryltriethoxysilane) are also suitable due to their combined aromatic and silane reactivity.

Examples of anhydride functionalizing agents include maleic anhydride, tetrahydrophthalic anhydride, dodecenylsuccinic anhydride, itaconic anhydride, methyltetrahydrophthalic anhydride, alkenylsuccinic anhydrides, octenylsuccinic anhydride, chlorendic anhydride, and related anhydrides capable of undergoing free-radical grafting.

In embodiments, the functionalizing agent, when used, is present in amounts of up to 10 phr, or 0.1 - 10, or 0.5 - 8, or 1 - 10, or 0.5 - 5, or 0.1 - 4 phr, based on 100 phr of the HSBC precursor.

(properties of Visbroken HSBC / f-m-HSBC - from Controlled Visbreaking): The structural changes introduced by controlled chain scission of the HSBC precursor, including reductions in molecular weight, increases in low-molecular-weight species, modification of block-to-block connectivity, and changes in viscoelastic damping behavior, impart distinctive rheological, mechanical, and adhesive properties to the resulting visbroken HSBC and optionally functionalized visbroken HSBC (f-m-HSBC). These properties are intrinsic to the polymer architecture produced by the visbreaking and optional functionalization steps described herein. The visbroken HSBC or f-m-HSBC can be provided in pellet form, enabling convenient use in standard pellet-feeding and melt-mixing equipment, where the material behaves as a solid, rubbery plasticizer.

In embodiments, the f-m-HSBC exhibits improved adhesion to both polar and non-polar substrates, including glass, silicon wafers, ceramic, metal, plastics, fibers, fabrics, wood, leather, masonry, concrete, rock, paper, cardboard, brick, plaster, cement, tiles, mortar, and asphalt, without the need of an adhesive or a primer layer.

In embodiments, each visbroken HSBC and f-m-HSBC independently has at least one of the following properties:

A tan $\delta$ value at 50°C of 0.08 - 1, or 0.10 - 0.90, or 0.11 - 0.80, or 0.12 - 0.70, or 0.08 - 0.65, or 0.12 - 0.70, or > 0.08, or < 1.

A tan $\delta$ peak (TanDmax) temperature of -42 to 20°C, or -38 to 10°C, or -35 to 5°C, or -34 to 0°C, or -42 to 0°C, or -34 to -3°C, or > -42°C, or < 0°C, measured at 10 rad/s.

A complex modulus (G*) at 100°C of 10 - 2000, or 30 - 1800, or 50 - 1600, or 100 - 1500, or 200 - 1000, or 50 - 600, or 100 - 500, or 150 - 450, or > 10, or > 20, or > 50, or < 1000 kPa.

A Shore A hardness (10 seconds) of 10 - 60, or 15 - 55, or 20 - 50, or 30 - 45, or 25 - 45, or > 25, or < 50, measured according to ASTM D2240.

A tensile strength of 1 - 20, or 1 - 15, or 1 - 10, or 1 - 8, or 2 - 7, or > 1, or < 15 MPa, measured according to ASTM D412.

An elongation at break of 200 - 1000%, or 500 - 900%, or 550 - 800%, or 600 - 750%, or 550 - 700%, or > 600%, or < 900%, measured according to ASTM D412.

A tear strength of > 10, or < 40, or 10 - 40, or 15 - 35, or 10 - 30, or 15 - 25 N/mm, measured according to ASTM D412.

A shear peel strength of > 1800, or > 2000, or < 4000, or 1800 - 5000, or 1900 - 4000, or 2000 - 3700, or 2200 - 3500, or 2400 - 3000 N/in$^2$, measured at 25°C on samples prepared at 125°C. Shear peel strength is indicative of adhesive strength to glass.

A 180° peel strength of > 26, or < 45, or 26 - 45, or 28 - 42, or 30 - 40 N/in, measured at 25°C on samples prepared at 130°C.

A melt viscosity at 140°C of > 150000, or < 300000, or 150000 - 300000, or 160000 - 250000, or 165000 - 200000 cP (150 - 300 Pa·s), measured according to ASTM D3835.

A melt viscosity at 190°C of > 12000, or < 40000, or 14000 - 40000, or 15000 - 30000, or 16000 - 25000 cP (12 - 40 Pa·s), measured according to ASTM D3835.

A gel content of < 10, or < 5, or < 1, or > 0.01 wt.%, based on total weight of the visbroken HSBC prior to immersion in toluene.

A dissipation factor (Df) of < 0.0100, or < 0.0050, or < 0.0010, or > 0.00001, at 10 GHz, measured at 10 GHz according to ASTM D2520. Df is measured on the visbroken HSBC (or f-m-HSBC in an uncured state).

(Chain Scission Mechanism): The visbroken HSBC is produced by subjecting a HSBC precursor to controlled polymer chain scission. The chain scission can be induced by exposing the HSBC precursor to any of ultraviolet (UV) radiation, gamma radiation, electron beam, microwave energy, X-ray radiation, heat, heated air, elemental oxygen, a chain scission agent, or combinations thereof (e.g., gamma radiation together with a chain scission agent).

In embodiments, the chain scission agent is selected from the group consisting of organic peroxide, hydrogen peroxide, sodium hypochlorite, ozone, potassium permanganate, sodium periodate, periodic acid, peracids (e.g., peracetic acid, performic acid), azobisisobutyronitrile (AIBN) or other azo initiators, Fenton-type redox systems, halogenating agents (e.g., chlorine, N-halosuccinimides), strong acids that promote backbone cleavage (e.g., sulfuric acid, methanesulfonic acid, trifluoroacetic acid, triflic acid), strong bases capable of inducing β-scission (e.g., potassium tert-butoxide, sodium tert-butoxide, sodium amide, lithium diisopropylamide), photochemical sensitizers (e.g., benzophenone, acetophenone, benzoyl peroxide, anthraquinone, thioxanthone), and mixtures thereof.

In embodiments, the chain scission agent is an organic peroxide selected from dicumyl peroxide (DCP), 1,3-bis(tert-butylperoxyisopropyl) benzene, diacyl peroxides, alkyl peresters, percarbonates, dilauroylperoxide (DLPO), dibenzoyl peroxide (DBPO), tert-butyl peroxy-2-ethylhexanoate (TBPEH), tert-butyl peroxy-isobutyrate (TBPIB), 1,1-di-(tert-butylperoxy) cyclohexane (DTBPC), tert-butyl perbenzoate (TBPB), 2,5-dimethyl-2,5-di (tert-butylperoxy) hexane (DBPH), 2,5-dimethyl-2,5-di (tert-butylperoxy) hexyne-3 (DYBP), di-tertbutyl peroxide (TBP), cumene hydroperoxide (CHP), tert-butyl hydroperoxide (TBHP), lauroyl peroxide, dipropionyl peroxide, p-menthane hydroperoxide, diphenylcyclohexyl peroxide, 3,6,9-triethyl-3,6,9-trimethyl-1,4,7-triperoxonane, t-butylperoxy-maleic acid, OO-(t-butyl) O-isopropyl monoperoxycarbonate, OO-t-butyl O-(2-ethoxyl)monoperoxycarbonate, OO-t-amyl O-(2-ethylhexyl)monoperoxycarbonate, t-butylperoxy acetate, t-amyl peroxy acetate, t-amyl peroxy benzoate, di-t-butyl diperoxy-phthalate, t-butyl cumyl peroxide, $\alpha$-$\alpha$-bis(t-butylperoxy), diisopropylbenzene, di-t-butyl peroxide, n-butyl-4,4-bis(t-butylperoxy)valerate, 1,1-di(t-butylperoxy)3,3,5-trimethyl cyclohexane, 1,1-di-(t-butylperoxy)cyclohexane, 1,1-di-(t-amylperoxy)cyclohexane, 2,2-di(t-butyl-peroxy)butane, ethyl-3,3,-di(t-butylperoxy)butyrate, 2,2-di(t-amyl peroxy)propane, ethyl 3,3-di(t-amhylperoxy)butyrate, and mixture thereof.

In embodiments, the chain scission agent is used in amounts of 0.001 - 5, or 0.05 - 4, or 0.01 - 3, or 0.001 - 3, or 0.05 - 3 phr, based on 100 phr of the HSBC precursor.

(Preparation of Visbroken / Functionalized Visbroken HSBC): In embodiments, a visbroken HSBC is prepared from a HSBC precursor by inducing controlled polymer chain scission. The chain scission can be effected by exposure to ultraviolet (UV) radiation, gamma radiation, electron beam, microwave energy, X-ray radiation, heat, heated air, elemental oxygen and a chain scission agent. Chain scission agents include free-radical initiators such as organic peroxides, hydroperoxides, peresters, percarbonates, persulfates, azo initiators, and combinations thereof.

In embodiments, the chain scission is performed in an extruder, e.g., single, twinscrew extruder, or other melt-reactive equipment capable of maintaining a controlled thermal and shear environment with melt processing zones, in the presence of a chain scission agent. The extrusion maximum temperature can be 100 - 400°C, or 130 - 380°C, or 150 - 350°C, or 170 - 340°C, or 170 - 400°C, or 100 - 340°C, and the residence time can be 5 sec - 10 min, or 5 - 30 min, or 20 sec - 2 min.

In embodiments, the visbroken HSBC is produced using two or more discrete chain-scission stages ("multi-chop visbreaking") or more than one visbreaking pass. In multi-chop visbreaking, a HSBC precursor or partially visbroken intermediate is subjected to chain-scission conditions in a first melt-processing zone and subsequently subjected to one or more additional chain-scission events in downstream zones or in a second pass through the same or different melt-processing equipment. Each stage can utilize the same or different temperatures, shear profiles, residence times, chain-scission agent, or chain-scission agent concentrations. Multi-chop visbreaking can be performed in multiple passes through a single extruder, in multizone extruders with sequential initiator addition, or in cascaded extruders. Multi-chop visbreaking provides a means of adjusting the extent and distribution of chain cleavage beyond that achievable in a single stage.

In embodiments, a multi-chop process includes introducing a second or different HSBC precursor into a downstream zone or into a second visbreaking stage such that the polymer melt during a later stage comprises a mixture of (i) a first-stage visbroken intermediate and (ii) a fresh HSBC precursor. This enables tailoring of molecular-weight distribution and low-molecular-weight species formation in ways that differ from visbreaking a pre-mixed blend in a single stage.

In embodiments, different chain-scission agents are used in different stages of multi-chop visbreaking. For example, a first stage can employ a dialkyl peroxide having a first decomposition temperature, while a second stage employs a perester, hydroperoxide, percarbonate, or azo initiator having a different decomposition temperature or radical-generation profile. Using sequential initiators provides additional control over chain scission relative to a single-initiator process.

In embodiments, the temperatures employed in sequential visbreaking stages are intentionally different. A subsequent stage can be operated at higher temperature to accelerate chain scission, or at lower temperature to moderate radical activity while maintaining melt homogeneity. Adjusting thermal profiles across stages provides further control of molecular-weight distribution and chain-scission uniformity.

In embodiments, the chain-scission step is conducted together with functionalization to produce a functionalized visbroken HSBC (f-m-HSBC). In such embodiments, the functionalizing agent is added concurrently with the chain-scission agent under melt-reactive or solid-state conditions such that radical-mediated chain scission and graft functionalization occur simultaneously. This one-pot process is particularly suitable for functionalizing agents that undergo free-radical grafting, including anhydrides, epoxides, silanes, and functional (meth)acrylates as defined herein. In other embodiments, the functionalizing agent is introduced after formation of the visbroken HSBC to separately control molecular-weight reduction and graft level.

In embodiments, the f-m-HSBC is prepared by a solid phase method in which the HSBC precursor, a chain scission agent, and a functionalizing agent are combined in a reactor at a temperature between 40°C and the melting or softening temperature of the HSBC precursor, and maintained under conditions sufficient to generate radicals without fully melting the polymer matrix. After the reaction is complete, the f-m-HSBC is recovered from the reactor.

In embodiments, the f-m-HSBC contains chemically bound functionalizing groups in an amount of 0.5 - 25, or 0.7 - 10, or 1 - 25, or 1 - 20, or 1 - 15, or 5 - 15, or 1 - 10, or 1 - 5, or > 1, or > 5, or > 10, or > 15, or < 25 wt.%, based on total weight of the f-m-HSBC. The f-m-HSBC can further contain unreacted (free) functionalizing agent in amounts < 1 wt.% or any sub-ranges thereof, based on the total amount of functionalizing agent added. Chemically bound groups include grafted anhydrides, epoxides, silanes, acids, or functional (meth)acrylate moieties introduced through the radical grafting process.

(End-Use Applications of Visbroken HSBC): A visbroken HSBC, optionally functionalized (f-m-HSBC), can be incorporated into a wide range of end-use products due to its combination of rubbery elasticity, high substrate wetting, and enhanced melt mobility. The visbroken polymers act as solid, rubbery plasticizers, improving processability, tack, cohesive strength, and flow in melt-processed compositions. In embodiments, the visbroken HSBC functions as a flow promoter or dispersion aid, enhancing the distribution of fillers, pigments, or other polymeric components within the formulation. In embodiments, because of their high melt mobility relative to non-visbroken precursors, m-HSBC and f-m-HSBC can also be used to modify reactive resins, including epoxy resins, polyester resins, and related thermoplastic or thermosetting systems.

Representative end-use applications include: a) adhesives and sealants, including glass, metal, ceramic, polymeric, and composite substrates; b) electronic coatings and encapsulants, including copper-clad laminates (CCLs), barrier coatings, and protective layers; c) overmolded articles and impact-modified thermoplastics; d) films, fibers, tapes, and laminates; e) medical, hygiene, and packaging products requiring softness, elasticity, or improved adhesion; f) lubricant gels, greases, and thickened formulations; and g) photovoltaic and electrical insulation components.

In embodiments wherein the visbroken HSBC is provided as a solid at room temperature (e.g., 25°C) that melts and disperses uniformly, it can be compounded using standard thermoplastic melt-processing methods such as extrusion, compounding, injection molding, or film casting.

Generally, the visbroken HSBC is added to a different (additional) polymer in formulations containing: based on total weight of the polymer composition: (a) 1 - 60 wt.% (or 5 - 55 wt.%) of a visbroken HSBC and/or a functionalized visbroken HSBC (f-m-HSBC), (b) 40 - 99 wt.% (or 45 - 95 wt.%) of at least one polymer selected from the group consisting of: polyolefins (e.g., polyethylene, polypropylene, polyisobutylene), rubbers (e.g., EPDM, IIR, SBR), polyesters (e.g., PET, PBT), polyamides (e.g., nylon 6, nylon 12), and mixtures thereof, and (c) up to 10 wt.% of at least one additive, including stabilizers, antioxidants, fillers, tackifiers, adhesion promoters, or other conventional modifiers. Other compatible polymers include polystyrene (PS), polyphenylene ether (PPE or PPO), thermoplastic starch-based materials, thermoplastic polyolefins, thermoplastic copolyester elastomers, polyether block amide, thermoplastic vulcanizate, thermoplastic polyurethanes (TPU), epoxy resins, polyester resins, bis maleimide resin (BMI), ionomer resins (ION), styrenic block copolymers (SBCs) other than the visbroken HSBC or f-m-HSBC (e.g., USBC, SIS, SBS, SIBS, HSBC, SEBS, SEBSS, SiBS, etc.), and mixtures thereof.

The performance of a polymer composition containing visbroken HSBC depends on the choice and relative amounts of the additional polymers, fillers, and additives. However, compositions incorporating visbroken HSBC typically exhibit enhanced melt mobility, improved substrate wetting, and higher adhesion strength compared with analogous formulations prepared without visbroken HSBC. Such improvements correlate with the elevated LMBI of the visbroken material, which introduces mobile low-Mw segments that assist flow, surface wetting, and energy dissipation at the adhesive interface.

Because formulation dominates the absolute melt-flow rate and adhesion values, the following ranges are illustrative of polymer compositions in which visbroken HSBC is used as a performance modifier.

In embodiments, polymer compositions containing visbroken HSBC or f-m-HSBC exhibit higher melt mobility and improved adhesion relative to analogous compositions lacking visbroken HSBC. The following values are representative and not limiting; they depend on the nature and proportion of the companion polymers, fillers, oils, tackifiers, and additives.

A melt flow rate (MFR) of 0.1 - 50, or 0.5 - 40, or 0.5 - 20, or > 0.50, or > 0.55 or < 50 g/10 min, measured according to ASTM D1238 at 130°C/2.16 kg.

A shear peel strength of > 250, or > 300, or > 250, or < 1000, or 250 - 1000, or 300 - 800, or 350 - 700, or 250 - 700, or 350 - 1000 N/in$^2$, measured at 25°C on samples prepared at 125°C, indicative of adhesion strength.

A 180° peel strength of > 55, or > 60, or < 200, or 50 - 200, or 55 - 180, or 60 - 150, or 65 - 150, or 70 - 120, or 65 - 200, or 55 - 120 N/in, measured at 25°C on samples prepared at 130°C.

(End-Use Applications - PIB-Containing Compositions for Adhesive and Sealant Applications): In embodiments, the visbroken HSBC (or f-m-HSBC) is blended with polyisobutylene (PIB), including solid or semi-solid PIB homopolymers and copolymers. PIB typically contains at least 60 wt.% isobutylene units and can have Mw values of > 20, or < 1000, or 20 - 1000, or 30 - 800, or 50 - 700, or 400 - 600, or 20 - 200, or 0.5 - 20, or 0.5 - 10 kg/mol. PIB can have a glass transition temperature (T$_g$) of -50 to -80°C, or -55 to -75°C, or -60 to - 70°C, measured by DSC; and a density of 0.85 - 0.98, or 0.87 - 0.95, or 0.88 - 0.93 g/cm$^3$, measured according to ASTM D1505. PIB provides tack, hydrophobicity, and cold-flexibility, while the visbroken HSBC contributes cohesive strength, improved melt flow, and enhanced substrate wetting.

In embodiments, the visbroken HSBC and/or f-m-HBSC is for use in PIB-containing sealant compositions comprising: (a) 5 - 40 wt.% visbroken HSBC and/or f-m-HSBC; (b) 25 - 90 wt.% PIB; (c) 0 - 30 wt.% polyolefin; (d) 0 - 60 wt.% fillers; and (e) up to 15 wt.% additives (e.g., stabilizers, drying agents, adhesion promoters). The amounts of (a) to (e) are independently selected within the specified ranges such that the total of all components is 100 wt.%. The polyolefin can be selected from the group consisting of amorphous polyalphaolefins (APAO), polyethylene, polypropylene, polyolefin elastomers, ethylene-alpha-olefin copolymers, and mixtures thereof. Fillers can include CaCO$_3$, silica, talc, kaolin, zinc oxide, barium sulfate, carbon black, glass spheres, or mixtures thereof. Drying agents can include alkoxysilanes, CaO, ZnO, zeolites, or anhydrous sulfates. In embodiments, the sealant composition further comprises a tackifier selected from the group consisting of aliphatic hydrocarbon resins, aromatic hydrocarbon resins, C$_5$ - C$_9$ petroleum resins, polyterpene resins, terpene-phenolic resins, rosin-based resins (e.g., gum rosin, wood rosin, tall oil rosin, hydrogenated rosin, disproportionated rosin, rosin esters, hydrogenated rosin esters), coumarone-indene resins, dicyclopentadiene (DCPD) resins, cycloaliphatic hydrocarbon resins; and mixtures thereof.

Blends of PIB with visbroken HSBC show unexpected and significant increases in adhesion relative to PIB alone. A sealant composition containing PIB with visbroken HSBC and/or f-m-HSBC is characterized as having at least one of the following properties before curing (i.e., non-cured):

A storage modulus (G') measured at 100°C of > 0.001, or > 0.002, or > 0.003, or < 0.010, or 0.001 - 0.010 MPa, measured by DMA.

A $T_g$ of < -20°C, or < -30°C, or < -40°C, or > -50°C, or -20°C to -50°C, measured by DMA.

A storage modulus (G') measured at 50°C of > 0.050, or > 0.055, or > 0.060, or < 0.100, or 0.050 - 0.100 MPa, measured by DMA.

A softening point of > 100°C, or > 105°C, or > 110°C, or < 150°C, or 100 - 150°C, measured according to ASTM D36.

A needle penetration of 5 - 15, or 6 - 12, or 5 - 10, measured according to ASTM D5M and reported in units of 0.1 mm.

A shear adhesion failure temperature (SAFT) of > 45°C, or > 50°C, or < 70°C, or 45 - 70°C.

In embodiments, after curing, the (cured) sealant compositions exhibit at least one of the following properties:

A MFR of > 10, or < 100, or 10 - 100, or 12 - 50, or 10 - 30 g/10 min, measured at 130°C with 2.16 kg load according to ASTM D1238.

A shear peel strength at 25°C of > 900, or < 2000, or 900 - 2000, or 950 - 1600, or 1000 - 15000 N/in$^2$, measured with glass substrate. The shear peel strength is measured on glass substrates after thermal conditioning at 125°C for 20 minutes, followed by 24 hours of conditioning prior to testing.

5 wt.% weight loss at a temperature of at least 350°C, or < 420°C, or 350 - 420°C, or 350 - 380°C, measured by thermogravimetric analyzer (TGA) at a heating rate of 6°C/min.

10 wt.% weight loss at a temperature of at least 355°C, or < 420°C, or 355 - 420°C, or 360 - 380°C, measured by thermogravimetric analyzer (TGA) at a heating rate of 6°C/min.

A $T_g$ of < -20°C, or < -30°C, or -40°C, or > -50°C, or -20°C to -50°C, measured by DMA.

A storage modulus (G') measured at 50°C of > 0.050, or > 0.055, or > 0.060, or < 0.100, 0.050 - 0.100 MPa, measured by DMA.

A storage modulus (G') measured at 100°C of > 0.010, or > 0.011, or > 0.012, or < 0.100, 0.010 - 0.100 MPa, measured by DMA.

A softening point of > 100°C, or > 110°C, or > 115°C, or < 170°C, or 100 - 170°C, measured according to ASTM D36.

A needle penetration of 5 - 15, or 6 - 12, or 5 - 10, measured according to ASTM D5M and reported in units of 0.1 mm.

A shear adhesion failure temperature (SAFT) of > 45°C, or > 50°C, or < 70°C, or 45 - 70°C.

(End-Use Applications - Curable Resin Compositions Containing Visbroken HSBCs for CCL): In embodiments, the visbroken HSBC or f-m-HSBC is incorporated into curable resin compositions suitable for use in copper-clad laminates (CCLs), printed circuit boards (PCBs), dielectric substrates, and other high-frequency electronic materials.

In embodiments, a curable resin composition comprises: (a) 10 - 90 wt.% of a visbroken HSBC and/or f-m-HSBC; (b) 20 - 90 wt.% of a resin; (c) 0 - 70 wt.% filler; and (d) up to 30 wt.% of at least one additive. The amounts of (a) to (d) are independently selected within the specified ranges such that the total of all components is 100 wt.%.

In embodiments, the resin is selected from the group consisting of epoxy resins, polyphenylene ether (PPE), cyanate ester resins, benzoxazine resins, phenolic resins, vinyl ester resins, bismaleimide resins, cyclic olefin polymers, polyolefin resins, polyester resins, polyamide resins, ionomer resins, aromatic resins including divinylbenzene-based reactive resins, and combinations thereof.

Examples of fillers include silica, alumina, aluminum hydroxide, magnesium hydroxide, boron nitride, aluminum nitride, talc, clay, kaolin, mica, wollastonite, calcium carbonate, barium sulfate, glass fibers, glass cloth, glass flakes, ceramic fillers, quartz, and mixtures thereof.

Examples of additives include curing agents, catalysts, flame retardants, coupling agents, processing aids, stabilizers, and mixtures thereof.

In embodiments, the curable resin composition is processed using a solvent-based method to facilitate uniform mixing, impregnation, or film formation prior to curing. The components can be dissolved or dispersed in an organic solvent to form a homogeneous resin solution or varnish. Examples of solvents include toluene, xylene, ethylbenzene, hexane, heptane, methyl ethyl ketone, methyl isobutyl ketone, cyclohexanone, ethyl acetate, propyl acetate, butyl acetate, and mixtures thereof. In embodiments, the solvent content is selected to achieve a solids content of 10 - 60 wt.%, or 20 - 50 wt.% for coating, impregnation of reinforcing substrates, or film casting. After application, the solvent is removed by evaporation under ambient, heated, or reduced-pressure conditions prior to curing.

The curable resin composition can be converted into a cured material (or cured composition) by subjecting the composition to thermal curing conditions appropriate for the selected resin system. In embodiments, curing is carried out in a single heating step or through a staged curing process, depending on whether the composition is used as a bulk resin, a film, a coating, or a prepreg for CCL manufacture.

In embodiments where a staged cure is employed, the composition is first be advanced to a partially cured state (often referred to as a B-stage) by heating at 80 - 140°C for 1 - 20 minutes, producing a tack-free, handleable prepreg. The B-staged material, or the uncured composition, can then be fully cured by heating at 150 - 220°C for 15 - 150 minutes, optionally under pressure when applied to a reinforcing substrate such as woven glass cloth. A post-cure at 180 - 250°C for 0.5 - 3 hours can be used to enhance thermal stability and dielectric consistency.

Upon curing in embodiments, the cured resin composition exhibits at least one of the following properties:

A dielectric constant (Dk) of < 3.0, or < 2.8, or < 2.6, or < 2.5, or > 0.1, or 0.1 - 3.0 at 10 GHz, according to ASTM D2520.

A dissipation factor (Df) of < 0.006, or < 0.005, or < 0.003, or < 0.002, or > 0.0001, or 0.0001 - 0.006 at 10 GHz, according to ASTM D2520.

A gel content of > 90%, or > 80%, or > 70%, or > 60%, or > 50%, or < 99%, or 90 - 99%.

A tensile strength of > 5, or > 7, or < 30, or 5 - 30 MPa, measured according to ASTM D412.

An elongation of > 450, or > 500, or < 900, or 450 - 900 MPa, measured according to ASTM D412.

(Analytical Methods): The molecular-weight distribution of the visbroken HSBC, including determination of the GPC major peak molecular weight ($M_p$) and the Low Mw Broadness Index (LMBI), is measured by GPC according to ASTM D5296. The GPC chromatogram provides the retention times, peak locations, and peak areas used to determine $M_p$ and to calculate LMBI based on the presence of low-molecular-weight species. The GPC method is operated under conditions appropriate for polymer molecular-weight measurement, including operation in a region where elution time varies linearly with $\log_{10}(Mw)$. The GPC chromatogram is presented as a detector response plotted versus elution time or elution volume, the detector signal being proportional to the concentration of polymer species eluting from the column. The resulting trace therefore reflects the relative amount of polymer eluting at each retention time. Using appropriate calibration standards, such as polystyrene narrow standards, each retention time is assigned a corresponding polystyrene-equivalent molecular weight. The GPC columns and operating conditions are selected such that the polymer species elute within the linear calibration region, where retention time exhibits a proportional relationship to the logarithm of molecular weight, enabling accurate determination of the molecular weight distribution.

Proton nuclear magnetic resonance ($^1$H NMR) spectroscopy may be employed to determine (i) the residual unsaturation (RU) and (ii) the aliphatic methyl proton index (AIMPI) of the copolymer. The RU value corresponds to the amount of remaining olefinic units present in the polymer chain. The AIMPI reflects the relative abundance of protons belonging to methyl groups located at the extremity of aliphatic short or long branches. Both RU and AIMPI are obtained by calculations using quantitative integration of the respective resonance signals appearing in the $^1$H NMR spectrum and using chemical units molar mass.

The hydrogenation levels of block "R" and block "S" can be determined using $^1$H NMR spectroscopy by comparing the integrals associated with olefinic protons in the HSBC to those present in the corresponding non-hydrogenated styrenic block copolymer from which it was derived. The hydrogenation level of block "R" is calculated based on the percentage reduction in olefinic proton signal intensity associated with diene units upon hydrogenation. The hydrogenation level of block "S" is assessed by confirming that the aromatic proton signal intensity remains substantially unchanged relative to the non-hydrogenated styrenic block copolymer, indicating that hydrogenation occurs predominantly in the diene-derived segments.

The viscoelastic properties of the visbroken HSBC, including tan δ at specified temperatures, tan δ peak temperature, and where relevant, complex modulus (G*), can be measured using dynamic mechanical analysis (DMA). DMA provides temperature-dependent viscoelastic profiles from which tan δ peak temperature, tan δ values at selected frequencies, and G* at predetermined temperatures can be determined.

The melt flow rate (MFR) of the visbroken HSBC can be measured according to ASTM D1238 under the designated temperature and load conditions. MFR values are used to characterize the melt-flow behavior of the polymer at elevated temperatures.

(Examples): The following examples are intended to be non-limiting.

The following test methods are used.

Glass transition temperature ($T_g$) of all polymer samples, unless otherwise specified, were measured by DMA according to ASTM 4065. The tan δ peak temperature here is considered to be the $T_g$ of the polymer. Temperature sweep experiments were conducted from - 80 to 200°C with a heating ramp of 2°C/min and at 10 rad/s in the shear mode using plate / plate tool unless specified otherwise, where complex modulus (G*), storage modulus (G'), loss modulus (G"), and loss factors (tan δ) were obtained as a function of temperature.

Unless otherwise specified, all reported melt flow rates (MFRs) were measured according to D1238 under 2.16 kg load and at 190°C.

The components used in examples include:

HSBC-1 (precursor) is a coupled hydrogenated block copolymer with structure (S-E/B)$_n$X with CE of 93% and contains 7 wt.% of diblock content. HSBC-1 has VAC of 20 wt.%, major peak $M_p$ of block copolymer of 67 kg/mol, $M_p$ of block "S" of 5 kg/mol, butylene unit ("B") content of 78 wt.%, RU of 0.1 meq/g, and diene units have a hydrogenation level of > 99%.

HSBC-2 (precursor) is a coupled hydrogenated block copolymer with structure (S-E/B/S)$_n$X with CE of 93% and contains 7 wt.% of diblock content. HSBC-2 has total VAC of 34 wt.%, major peak $M_p$ of block copolymer of 125 kg/mol, $M_p$ of block 'S' of about 7 kg/mol, butylene unit ("B") content of 72 wt.%, RU of 0.04 meq/g, and diene units have a hydrogenation level of > 99%.

HSBC-3 (precursor) is a coupled hydrogenated block copolymer with structure (pMS-pMS/E/B)$_n$X with n = 2, 3, 4 and more. HSBC-3 contains 13 wt.% of diblock content and has a CE of 87%, VAC of 50 wt.%, major peak $M_p$ of block copolymer of 123 kg/mol, $M_p$ of block "pMS" of 11 kg/mol, butylene unit ("B") content of 76 wt.%, RU of 0.10 meq/g, and diene units have a hydrogenation level of > 99%.

HSBC-4 (precursor) is a coupled hydrogenated block copolymer with structure (S-E/B)$_n$X with CE of 30% and contains 70 wt.% of diblock content. HSBC-4 precursor has n=2, VAC of 30 wt.%, major peak $M_p$ of block copolymer of 37 kg/mol, $M_p$ of block "S" of 7 kg/mol, butylene unit ("B") content of 40 wt.%, RU of 0.10 meq/g, and diene units have a hydrogenation level of > 99%.

HSBC-5 (precursor) is a coupled hydrogenated block copolymer with structure (S-E/B)$_n$X with CE of 95% and contains 5 wt.% of diblock content. HSBC-5 has VAC of 31 wt.%, major peak $M_p$ of 57 kg/mol, $M_p$ of block "S" of 6 kg/mol, butylene unit ("B") content of 40 wt.%, and diene units have a hydrogenation level of > 99%.

SBC-6 (precursor) is a sequential non-hydrogenated block copolymer with structure S-polybutadiene-S. SBC-6 has VAC of 38 wt.%, major peak Mp of 102 kg/mol, Mp of block "S" of 10 kg/mol, and diene units have a hydrogenation level of 0%.

HSBC-7 (Precursor) is a coupled hydrogenated block copolymer with structure (S-E/B)$_n$X with CE of 93% and contains 7 wt.% of diblock content. HSBC-7 has VAC of 13 wt.%, major peak $M_p$ of block copolymer of 171 kg/mol, $M_p$ of block "S" of 6 kg/mol, butylene unit ("B") content of 80 wt.%, and diene units have a hydrogenation level of 99.97%.

APAO-1 is an amorphous polyolefin having a melt viscosity of 3000 mPa.s measured at 190°C, and softening point of 108°C.

APAO-2 is silane modified amorphous poly-alpha-olefin from Evonik.

Peroxide-1 (PO-1): 2,5-dimethyl-2,5-di-(tert-butylperoxy)hexane (DBPH).
Peroxide-2 (PO-2): bis(isobutyryl) peroxide (BIBP).
Peroxide-3 (PO-3): tert-butyl hydroperoxide (TBHP).
Peroxide-4 (PO-4): cumene hydroperoxide (CHP).
Peroxide-5 (PO-5): benzoyl peroxide (BPO).
Peroxide-6 (PO-6): lauroyl peroxide (LPO).
MA: maleic anhydride.
Silane: vinyltrimethoxysilane (VTMOS)

PIB-1 is polyisobutylene having Mw of 500 kg/mol, DSC $T_g$ of -64°C, and density of 0.91 g/cm$^3$.

PIB-2 is polyisobutylene having Mw of 53 kg/mol, PDI of 3.2, DSC $T_g$ of -64°C, and density of 0.91 g/cm$^3$.

HCR-1 is hydrogenated aliphatic hydrocarbon resin having softening point of 100°C, and molecular weight ($M_z$) of 1250 g/mol, from Eastman.

TAIC: triallyl isocyanurate.

PPE-1: a modified, low molecular weight, bi-functional oligomer based on polyphenylene ether with vinyl end-groups having $T_g$ of 160°C, and number average molecular weight of 2300g/mol.

(Examples 1 to 55): 100 parts of HSBC precursors were premixed at 25°C with suitable amounts of peroxides, and, where applicable, with a functionalizing agent (e.g., silane or maleic anhydride). The premixed content was then fed into twin screw extruder at 25°C, after which the temperature of the extruder was increased to a temperature in the range of 180 to 330°C (extruder temperature or "ET"). During melt processing in the extruder, controlled polymer chain scission occurred to produce visbroken HSBC and, when a functionalizing agent was included, the functionalization reaction proceeded concurrently to form a functionalized visbroken HSBC (f-m-HSBC). Under these conditions, the molecular weight of each styrenic block "S" in the visbroken HSBC or f-m-HSBC was substantially retained relative to the corresponding block "S" in the HSBC precursor. The molten visbroken or f-m-HSBC exiting the extruder die was pelletized using an underwater pelletizer. The resulting pellets were then used to prepare sample specimens for conducting various tests. The amounts of components and extruder temperatures used for each example are provided in Tables 1A to 1F. Unless otherwise indicated, all examples were prepared using a single visbreaking pass. The measured properties of the examples are summarized in Tables 2A to 2F and Table 3.

Table 1A

| | Ex-1 | Ex-2 | Ex-3 | Ex-4 | Ex-5 | Ex-6 | Ex-7 | Ex-8 | Ex-9 | Ex-10 | Ex-11 | Ex-12 | Ex-13 |
|---|---|---|---|---|---|---|---|---|---|---|---|---|---|
| HSBC-1 (phr) | 100 | 100 | 100 | 100 | - | - | - | - | - | - | - | - | - |
| HSBC-2 (phr) | - | - | - | - | 100 | 100 | 100 | - | - | - | - | - | - |
| HSBC-3 (phr) | - | - | - | - | - | - | - | - | - | - | 100 | 100 | - |

(continued)

| | Ex-1 | Ex-2 | Ex-3 | Ex-4 | Ex-5 | Ex-6 | Ex-7 | Ex-8 | Ex-9 | Ex-10 | Ex-11 | Ex-12 | Ex-13 |
|---|---|---|---|---|---|---|---|---|---|---|---|---|---|
| HSBC-4 (phr) | - | - | - | - | - | - | - | - | 100 | 100 | - | - | - |
| Ex-7 (phr) | | | | | | | | 100 | | | | | |
| APAO-1 (phr) | - | - | - | - | - | - | - | - | - | - | - | - | 100 |
| PO-1 (phr) | - | 0.60 | 0.66 | 0.63 | - | 0.60 | 0.61 | | - | 0.60 | - | 0.30 | - |
| VTMOS (phr) | - | - | 8.75 | 3.65 | - | - | - | - | - | - | - | - | - |
| MA (phr) | - | - | - | - | - | - | 1.74 | - | - | - | - | - | - |
| ET (°C) | - | 180 | 180 | 180 | - | 330 | 185 | 330 | - | 330 | - | 330 | - |
| Amount of bound functionalizing agent (wt.%) | - | - | 5.0 | 3.0 | - | - | 1.1 | 0.8 | - | - | - | - | - |
| Major peak $M_p$ (kg/mol) | 60 | - | - | 64 | 133 | 48 | 138 | 42 | 36 | 38 | 119 | 101 | - |
| ET: Extruder temperature | | | | | | | | | | | | | |

Table 1B

| | Ex-14 | Ex-15 | Ex-16 | Ex-17 | Ex-18 | Ex-19 | Ex-20 | Ex-21 | Ex-22 |
|---|---|---|---|---|---|---|---|---|---|
| HSBC-3 (phr) | 100 | 100 | 100 | 100 | 100 | 100 | 100 | 100 | 100 |
| PO-1 (phr) | - | - | 0.40 | 0.30 | - | - | - | - | - |
| PO-4 (phr) | 0.20 | 0.20 | - | - | - | 0.09 | 0.20 | 0.37 | 1.00 |
| ET (°C) | 170 | 330 | 165 | 330 | 330 | 330 | 330 | 330 | 330 |
| ET: Extruder temperature | | | | | | | | | |

Table 1C

| | Ex-23 | Ex-24 | Ex-25 | Ex-26 | Ex-27 | Ex-28 | Ex-29 | Ex-30 | Ex-31 | Ex-32 | Ex-33 |
|---|---|---|---|---|---|---|---|---|---|---|---|
| HSBC-3 (phr) | 100 | 100 | 100 | 100 | 100 | 100 | 100 | 100 | 100 | 100 | 100 |
| PO-1 (phr) | - | - | - | - | - | - | - | - | 0.60 | - | - |
| PO-4 (phr) | 1.50 | 2.00 | 0.21 | 0.07 | 0.07 | 0.07 | 0.18 | 0.60 | - | - | - |
| PO-5 (phr) | - | - | - | - | - | - | - | - | - | 0.60 | - |
| PO-6 (phr) | - | - | - | - | - | - | - | - | - | - | 0.60 |
| ET (°C) | 330 | 330 | 330 | 330 | 330 | 330 | 330 | 330 | 330 | 330 | 330 |
| Visbreaking Passes (No.) | - | - | - | - | 2 | 3 | - | - | - | - | - |
| Major peak $M_p$ (kg/mol) | - | - | 115 | - | - | 40 | - | - | - | - | - |
| ET: Extruder temperature | | | | | | | | | | | |

Table 1D

| | Ex-34 | Ex-35 | Ex-36 | Ex-37 | Ex-38 | Ex-39 | Ex-40 | Ex-41 |
|---|---|---|---|---|---|---|---|---|
| HSBC-5phr | 100 | 100 | 100 | 100 | - | - | - | - |
| SBC-6 phr | - | - | - | - | 100 | 100 | 100 | 100 |
| PO-1 (phr) | - | - | 0.30 | 0.60 | - | - | 0.20 | 0.40 |
| ET (°C) | - | 330 | 330 | 330 | - | 280 | 280 | 280 |

(continued)

|  | Ex-34 | Ex-35 | Ex-36 | Ex-37 | Ex-38 | Ex-39 | Ex-40 | Ex-41 |
|---|---|---|---|---|---|---|---|---|
| Major peak $M_p$ (kg/mol) | 59 | 60 | 60 | 60 | 103 | 105 | Gel | Gel |
| ET: Extruder temperature | | | | | | | | |

Table 1E

|  | Ex-42 | Ex-43 | Ex-44 | Ex-45 | Ex-46 | Ex-47 | Ex-48 | Ex-49 | Ex-50 | Ex-51 |
|---|---|---|---|---|---|---|---|---|---|---|
| HSBC-1 (phr) | 100 | 100 | 100 | 100 | 100 | 100 | 100 | 100 | 100 | 100 |
| PO-1 (phr) | - | - | 0.60 | - | - | - | - | 0.40 | - | - |
| PO-2 (phr) | - | - | - | - | - | - | 0.40 | - | - | - |
| PO-3 (phr) | - | - | - | - | - | - | - | - | 0.40 | - |
| PO-4 (phr) | - | - | - | - | - | - | - | - | - | 0.40 |
| ET (°C) | - | 330 | 180 | 250 | 280 | 330 | 330 | 330 | 330 | - |
| ET: Extruder temperature | | | | | | | | | | |

Table 1F

|  | Ex-52 | Ex-53 | Ex-54 | Ex-55 |
|---|---|---|---|---|
| HSBC-7 phr | 100 | 100 | 100 | 100 |
| PO-2 (phr) | - | - | 0.30 | 0.60 |
| ET (°C) | - | 330 | 330 | 330 |
| ET: Extruder temperature | | | | |

Table 2A

| | Ex-1 | Ex-2 | Ex-3 | Ex-4 | Ex-5 | Ex-6 | Ex-7 | Ex-8 | Ex-9 | Ex-10 | Ex-11 | Ex-12 | Ex-13 |
|---|---|---|---|---|---|---|---|---|---|---|---|---|---|
| MFR (g/10 min) [190°C/0.325 kg] | 4 | 9 | 20 | 22 | 0.9 | 72.2 | 1.2 | 12 | 0.5 | 3.5 | < 1 | 1.4 | > 174 |
| MFR (g/10 min) [190°C/2.16 kg] | 41 | 90 | 190 | 170 | 8.2 | > 200 | 11 | 119 | 19 | 76 | 5.4 | 20 | > 400 |
| Gel content (wt.%) | 0.4 | 0.7 | 0.9 | 0.9 | 0.3 | 0.6 | 0.7 | 1.0 | 0.3 | 0.7 | 0.2 | 0.5 | - |
| Df (non-cured) | - | - | - | - | - | - | - | - | - | - | 0.0004 | - | - |
| Tan $\delta$ [50°C] | 0.07 | 0.17 | 0.13 | 0.23 | 0.074 | 0.58 | 0.17 | 0.265 | 0.16 | 0.25 | 0.08 | - | 0.25 |
| T [TanDmax] (°C) | −35 | −37 | −33 | −37 | −6 | −11 | −10 | −4.88 | −49 | −51 | −16 | - | −11 |
| G* [100°C] (kPa) | 287 | 73 | 270 | 91 | 476 | 14 | 228 | 107 | 397 | 138 | 4140 | - | 0.3 |
| LMBI (%) | 13.8 | 35 | > 25 | 30.6 | 12 | 59 | 57.6 | 44.7 | 16.1 | 22.3 | 13.6 | 65.4 | < 25 |
| Integral1 (%) | 9.8 | 10 | 10 | 10 | 13.3 | 13.5 | 13.3 | 17 | 13 | 13 | 16 | 16 | - |
| Integral2 (%) | 3.9 | 4 | 4 | 4 | 2.8 | 2.8 | 2.8 | 4 | 5 | 5 | 4.3 | 4 | - |
| Integral3 (%) | 90.2 | 90 | 90 | 90 | 86.6 | 86.3 | 86.5 | 83 | 87 | 87 | 84.0 | 84 | - |
| Integral4 (%) | 36.2 | 36 | 36 | 36 | 21.6 | 21.7 | 21.3 | 27 | 14 | 14 | 19.8 | 19.8 | - |
| ArBPI (%) | 39.8 | 40 | 40 | 40 | 21 | 20.6 | 20.8 | 21.0 | 39.7 | 39.7 | 27.5 | 27.5 | - |
| AlMPI (%) | 40.1 | 40 | 40 | 40 | 24.9 | 25.1 | 24.6 | 32.2 | 15.8 | 15.8 | 23.6 | 23.6 | - |
| RU (meq/g) ozonolysis | 0.12 | 0.12 | 0.12 | 0.12 | 0.04 | 0.04 | 0.07 | 0.04 | 0.12 | 0.12 | 0.1 | 0.1 | - |

Table 2B

| | Ex-14 | Ex-15 | Ex-16 | Ex-17 | Ex-18 | Ex-19 | Ex-20 | Ex-21 | Ex-22 |
|---|---|---|---|---|---|---|---|---|---|
| MFR (g/10 min) [170°C/2.16 kg] | 2.0 | 20.3 | < 0.1 | 20.1 | 1.8 | 6.2 | 20.3 | 35.2 | 53.1 |
| MFR (g/10 min) [190°C/0.325 kg] | - | 4.1 | < 0.1 | 4.4 | - | 1.4 | 4.4 | 7.3 | 11.8 |
| MFR (g/10 min) [190°C/2.16 kg] | - | > 20 | - | > 20 | - | 20.4 | > 20 | > 20 | > 20 |
| Df (non-cured) | - | - | - | - | - | 0.00055 | 0.00064 | 0.00094 | 0.0012 |

Table 2C

| | Ex-23 | Ex-24 | Ex-25 | Ex-26 | Ex-27 | Ex-28 | Ex-29 | Ex-30 | Ex-31 | Ex-32 | Ex-33 |
|---|---|---|---|---|---|---|---|---|---|---|---|
| MFR (g/10 min) [170°C/2.16 kg] | 91.4 | 115.7 | 17.0 | 8.5 | 28.0 | 73.4 | 8.6 | 15.3 | 7.3 | 2.3 | 2.1 |
| MFR (g/10 min) [190°C/0.325 kg] | 19.5 | 23.1 | 3.8 | 1.8 | 6.5 | 15.6 | 1.9 | 3.5 | 1.6 | < 1 | < 1 |

(continued)

|  | Ex-23 | Ex-24 | Ex-25 | Ex-26 | Ex-27 | Ex-28 | Ex-29 | Ex-30 | Ex-31 | Ex-32 | Ex-33 |
|---|---|---|---|---|---|---|---|---|---|---|---|
| MFR (g/10 min) [190°C/2.16 kg] | > 20 | > 20 | > 20 | > 20 | > 20 | > 20 | > 20 | 53.5 | 24.1 | - | - |
| Df (non-cured) | 0.0017 | 0.0023 |  |  |  |  |  |  |  |  |  |
| LMBI (%) | - | - | 30.0 | - | - | 48 | - | - | - | - | - |

Table 2D

|  | Ex-34 | Ex-35 | Ex-36 | Ex-37 | Ex-38 | Ex-39 | Ex-40 | Ex-41 |
|---|---|---|---|---|---|---|---|---|
| MFR (g/10 min) [190°C/2.16 kg] | 3.8 | - | 10.7 | - | 3 | < 1 | - | - |
| Gel content (wt.%) | 0.3 | - | - | - | 0.9 | 5.5 | > 10 | > 10 |
| LMBI (%) | 10.6 | - | ~ 25 | 33.6 | 11.8 | - | - | - |

Table 2E

|  | Ex-42 | Ex-43 | Ex-44 | Ex-45 | Ex-46 | Ex-47 | Ex-48 | Ex-49 | Ex-50 | Ex-51 |
|---|---|---|---|---|---|---|---|---|---|---|
| MFR (g/10 min) [190°C/0.325 kg] | 4.0 | 4.3 | 9 | 15.6 | 23.7 | 38.4 | 36.5 | 30.5 | 31.9 | 36.4 |
| MFR (g/10 min) [190°C/2.16 kg] | > 20 | > 20 | 90 | > 20 | > 20 | > 20 | > 20 | > 20 | > 20 | > 20 |
| Gel content (wt.%) | 0.4 | 0.7 | 0.7 | 0.7 | 0.8 | 0.8 | 0.8 | 0.8 | 0.8 | 0.8 |
| Tan $\delta$ [50°C] | - | - | 0.169 | - | - | - | - | - | - | - |
| T [TanDmax] (°C) | - | - | -36.77 |  |  |  |  |  |  |  |
| G* [100°C] (kPa) | - | - | 73 | - | - | - | - | - | - | - |
| LMBI (%) | 12.4 | - | > 25 | - | - | - | 66.2 | 59.2 | 51.1 | 56.9 |
| Integral1 (%) | - | - | 10 | - | - | - | - | - | - | - |
| Integral2 (%) | - | - | 4 | - | - | - | - | - | - | - |
| Integral3 (%) | - | - | 90 | - | - | - | - | - | - | - |
| Integral4 (%) | - | - | 36 | - | - | - | - | - | - | - |
| ArBPI (%) | - | - | 39.6 | - | - | - | - | - | - | - |
| AIMPI (%) | - | - | 40.1 | - | - | - | - | - | - | - |
| RU (meq/g) ozonolysis | - | - | 0.12 | - | - | - | - | - | - | - |

Table 2F

|  | Ex-52 | Ex-53 | Ex-54 | Ex-55 |
|---|---|---|---|---|
| MFR (g/10 min) [190°C/2.16 kg] | 1.8 | - | 55.0 | 132.6 |

(continued)

|  | Ex-52 | Ex-53 | Ex-54 | Ex-55 |
|---|---|---|---|---|
| Gel content (wt.%) | 0.3 | 0.6 | 0.6 | 0.7 |

Table 3

|  | Ex-4 |
|---|---|
| Bound silane content (wt.%) | 3 |
| Free silane (wt.%) | 0.5 |
| MFR (g/10 min) [190°C/2.16 kg] | 170 |
| Glass bonding, shear peel (N/in$^2$) measured at 25°C | 2600 |
| Glass bonding, 180° peel (N/in) measured at 25°C | 32 |
| $T_g$ [DMA] (°C) | -32 |
| Melt viscosity (cP) at 140°C | 176400 |
| Melt viscosity (cP) at 190°C | 18200 |
| Shore A Hardness [10 sec] | 35 |
| Tensile strength (MPa) | 4.2 |
| Elongation at break (%) | 650 |
| Tear strength (N/mm) | 21 |

(Examples 56 to 62): Preparation of PIB-based sealant compositions. Sealant compositions were prepared using visbroken HSBC in combination with additional polymeric components and additives in the amounts set forth in Table 4. The components of each composition were combined and melt-mixed at a temperature of 200°C for 45 minutes to obtain a homogeneous sealant composition. Following melt processing, the sealant compositions, containing dibutyltin dilaurate as curing catalyst (0.1 wt.%), were subjected to curing treatment by immersing in a water bath maintained at 60°C for 7 days. The water-to-sealant sample weight ratio during curing was 7:1. After curing, the cured sealant samples were removed from the water bath, and evaluated for their physical, mechanical, and thermal properties. The compositions and corresponding measured properties are summarized in Table 4.

Table 4

|  | Ex-56 | Ex-57 | Ex-58 | Ex-59 | Ex-60 | Ex-61 | Ex-62 |
|---|---|---|---|---|---|---|---|
| PIB-1 (wt.%) | 20 | 16 | 16 | 16 | 16 | 14 | 16 |
| PIB-2 (wt.%) | 80 | 64 | 64 | 64 | 64 | 56 | 64 |
| Block copolvmer of Ex-4 (wt.%) | - | 20 | - | - | - | 20 | 12 |
| HSBC-4 (wt.%) |  |  | 20 |  |  |  |  |
| APAO-2 (wt.%) |  |  |  | 20 |  |  |  |
| HCR-1 (wt.%) |  |  |  |  | 20 |  |  |
| APAO-1 |  |  |  |  |  | 10 | 8 |
| Properties |  |  |  |  |  |  |  |
| MFR (g/10 min) [130°C/2.16 kg] | 28.5 | 16.1 | 8.8 | 19.8 | 22.8 | 16.8 | 12.3 |
| Glass bonding, shear peel (N/in$^2$) measured at 25°C | 808 | 1025 | 944 | 1147 | 1227 | 1356 | 1139 |
| 5 wt.% weight-loss temperature (°C) | 347 | 356 | 362 | 357 | 355 | 358 | 359 |
| 10 wt.% weight-loss temperature (°C) | 358 | 368 | 371 | 367 | 372 | 368 | 370 |
| $T_g$ by DMA (°C) non-cured | -36 | -36 | -38 | -35 | -21 | -35 | -34 |

(continued)

|  | Ex-56 | Ex-57 | Ex-58 | Ex-59 | Ex-60 | Ex-61 | Ex-62 |
|---|---|---|---|---|---|---|---|
| $T_g$ by DMA (°C) Cured | -34 | -37 | -38 | -34 | -21 | -35 | -34 |
| G' (50°C) (MPa) non-cured | 0.0431 | 0.0384 | 0.11 | 0.0438 | 0.0384 | 0.0558 | 0.0738 |
| G' (50°C) (MPa) cured | 0.0196 | 0.0716 | 0.0990 | 0.052 | 0.0046 | 0.0671 | 0.0726 |
| G' (100°C) (MPa) non-cured | 0.006 | 0.0065 | 0.0165 | 0.0042 | 0.0022 | 0.0043 | 0.0131 |
| G' (100°C) (MPa) cured | 0.0039 | 0.0121 | 0.0159 | 0.0079 | 0.0078 | 0.0116 | 0.0122 |
| Softening point (°C) non-cured | 93 | 127 | 141 | 114 | 102 | 142 | 110 |
| Softening point (°C) cured | 99 | 139 | 152 | 118 | 123 | 160 | 113 |
| Needle penetration (0.1mm) non-cured | 12.2 | 8.5 | 6.0 | 7.1 | 7.6 | 6.8 | 7.2 |
| Needle penetration (0.1mm) cured | 10.4 | 8.2 | 5.6 | 6.7 | 7.8 | 6.7 | 6.7 |
| SAFT* (°C) non-cured | 50.7 | 58.3 | 64.7 | 50.7 | 51.3 | 61.0 | 53.7 |
| SAFT* (°C) cured | 50.3 | 60.7 | 62.7 | 54.0 | 52.3 | 60.3 | 54.0 |
| *Shear Adhesion Failure Temperature | | | | | | | |

(Examples 63 to 71): Preparation of CCL compositions. Compositions were prepared using visbroken HSBCs, PPE, and additives in amounts set forth in Table 5. For each example, the components were combined using a solvent-based blending method in which the total solids content was 25 - 30 wt.% using toluene. BIBP (0.5 wt.%) was added as a curing agent. After solution blending, the solvent was removed. The resulting compositions were then formed into test specimens for dielectric characterization using a heat-press curing process, including a preheating step at 110°C followed by final curing step at 180°C for 2 hours to obtain cured samples. After curing, the specimens were evaluated for dielectric, thermal, and mechanical properties. The compositions and corresponding measured properties for Examples 63 - 71 are summarized in Table 5.

Table 5

|  | Ex-63 | Ex-64 | Ex-65 | Ex-66 | Ex-67 | Ex-68 | Ex-69 | Ex-70 | Ex-71 |
|---|---|---|---|---|---|---|---|---|---|
| Block copolymer of Ex-25 (wt.%) | 100 | 90 | 80 | - | - | - | 30 | 50 | 70 |
| Block copolymer of Ex-28 (wt.%) | - | - | - | 100 | 90 | 80 | - | - | - |
| TAIC (wt.%) | - | 10 | 20 | - | 10 | 20 | - | - | - |
| PPE-1 (wt.%) | - | - | - | - | - | - | 70 | 50 | 30 |
| PO-2 (wt.%) | 0.5 | 0.5 | 0.5 | 0.5 | 0.5 | 0.5 | 0.5 | 0.5 | 0.5 |
| Properties | | | | | | | | | |
| Dk | 2.3 | - | - | 2.3 | - | - | 2.4 | 2.4 | 2.4 |
| Df | 0.0006 | - | - | 0.0006 | - | - | 0.00132 | 0.00157 | 0.00174 |
| Gel content (%) | 69 | | 88 | 64 | - | 81 | - | - | - |
| Tensile strength (MPa) | 9 | - | - | 9 | - | - | - | - | - |
| Elongation (%) | 550 | - | - | 550 | - | - | - | - | - |

**Claims**

1. A visbroken hydrogenated styrenic block copolymer comprising:

at least one block "S" composed of vinyl aromatic units, and

at least one block "R" composed of hydrogenated diene units, the diene units having a hydrogenation level > 50%, measured by $^1$H NMR;

wherein:

the visbroken hydrogenated styrenic block copolymer is **characterized by**:

a Low Mw Broadness Index (LMBI) $\geq$ 25%;

a GPC major peak molecular weight ($M_p$) of 10 to 200 kg/mol, measured according to ASTM D5296;

a GPC molecular weight ($M_p$) of block "S" of 3 to 20 kg/mol, measured according to ASTM D5296;

a residual unsaturation (RU) of up to 0.5 meq/g, measured by $^1$H NMR;

a tan $\delta$ peak temperature of -42 to 20°C, measured by dynamic mechanical analysis;

an aliphatic methyl proton index (AlMPI) of 18 to 45%, determined by $^1$H NMR; and

a melt flow rate (MFR) of 10 to 2000 g/10 min, or preferably 10 to 400 g/10 min, or more preferably 10 to 250 g/10 min, at 190°C with a 2.16 kg load, measured according to ASTM D1238.

2. The visbroken hydrogenated styrenic block copolymer of claim 1, wherein the visbroken hydrogenated styrenic block copolymer has at least one of:

aromatic proton contents from 1 to 30%;

an aromatic blocky proton index (ArBPI) of 10 to 50%; and

an aliphatic methyl proton index (AlMPI) of 23 to 40%;

all properties are measured by $^1$H NMR.

3. The visbroken hydrogenated styrenic block copolymer of claim 1, wherein the visbroken hydrogenated styrenic block copolymer has a residual unsaturation (RU) of 0 to 0.4 meq/g, or preferably 0 to 0.2 meq/g.

4. The visbroken hydrogenated styrenic block copolymer of any of claims 1-3, wherein the visbroken hydrogenated styrenic block copolymer has a general structure selected from: S-R, (S-R)$_n$X, S-R-S, S-R-S-R, R-S-R-S-R, (R-S-R)$_n$X, S-R-S-R-S, (S-R-S)$_n$X, and mixtures thereof; n is an integer from 2 to 30, and X is residue of a coupling agent.

5. The visbroken hydrogenated styrenic block copolymer of any of claims 1-3, wherein the visbroken hydrogenated styrenic block copolymer has a butylene unit ("B") content > 40 wt.%, measured by $^1$H NMR.

6. The visbroken hydrogenated styrenic block copolymer of any of claims 1-3, wherein the block "R" is selected from any of E/B, E/B/S, EP/MB, EP/MB/S, E/B/EP/MB, and combinations thereof;

each block E/B is composed of ethylene ("E") units and butylene ("B") units;

each block E/B/S is composed of ethylene ("E") units, butylene ("B") unit, and vinyl aromatic ("S") units;

each block EP/MB is composed of ethylene-propylene (EP) units and methylene-butylene (MB) units;

each block EP/MB/S is composed of ethylene-propylene (EP) units, methylene-butylene (MB) units, and vinyl aromatic ("S") units; and

each block E/B/EP/MB is composed of ethylene ("E") units, butylene ("B") units, ethylene-propylene (EP) units, and methylene-butylene (MB) units.

7. The visbroken hydrogenated styrenic block copolymer of any of claims 1-3, wherein the visbroken hydrogenated styrenic block copolymer has a structure selected from (S-E/B)$_n$X, (S-E/B/S)$_n$X, (pMS-pMS/E/B)$_n$X, and combination thereof; n is an integer from 2 to 10, and X is a residue of a coupling agent; and wherein

each block "S" is composed of styrene units;

each block E/B is composed of ethylene ("E") units and butylene ("B") units;

each block E/B/S is composed of ethylene ("E") units, butylene ("B") unit, and vinyl aromatic ("S") units;

each block pMS is composed of para-methylstyrene units; and

each block pMS/E/B is composed of para-methylstyrene units, ethylene ("E") units, and butylene ("B") units.

8. The visbroken hydrogenated styrenic block copolymer of any of claims 1-3, wherein the visbroken hydrogenated styrenic block copolymer has at least one of:

a tan δ value at 50°C of 0.08 to 1, measured by dynamic mechanical analysis;

a complex modulus (G*) of 10 to 2000 kPa, measured at 100°C by dynamic mechanical analysis; and

a gel content < 10 wt.%, measured as described in the specification.

9. The visbroken hydrogenated styrenic block copolymer of any of claims 1-3, wherein the visbroken hydrogenated styrenic block copolymer is functionalized with at least one functionalizing agent selected from the group consisting of: (meth)acrylates, alkoxysilanes, anhydrides, epoxides, acids, isocyanates, and combinations thereof.

10. The visbroken hydrogenated styrenic block copolymer of claim 9, wherein the functionalizing agent is selected from maleic anhydride, vinyltrimethoxysilane, and combinations thereof.

11. The visbroken hydrogenated styrenic block copolymer of any of claims 1-3, wherein the visbroken hydrogenated styrenic block copolymer has a vinyl aromatic unit content (VAC) of < 60 wt.%, measured by $^1$H NMR.

12. The visbroken hydrogenated styrenic block copolymer of any of claims 1-3, wherein the visbroken hydrogenated styrenic block copolymer has a dissipation factor (Df) of < 0.010 at 10 GHz, as measured on the uncured polymer according to ASTM D2520.

13. A sealant composition comprising:

(a) 5 to 40 wt.% of the visbroken hydrogenated styrenic block copolymer of any of claims 1-3;

(b) 25 to 90 wt.% of polyisobutylene;

(c) 0 to 30 wt.% of a polyolefin selected from the group consisting of amorphous polyalphaolefins (APAO), polyethylene, polypropylene, polyolefin elastomers, ethylene-alpha-olefin copolymers, and mixtures thereof;

(d) 0 to 60 wt.% of filler; and

(e) 0 to 15 wt.% of additives, based on total weight of the polymer composition.

14. The sealant composition of claim 13, wherein the sealant composition has at least one of:

a melt flow rate (MFR) of > 10 g/10 min, measured at 130°C with 2.16 kg load, according ASTM D1238;

a shear peel strength at 25°C of 900 to 2000 N/in$^2$, measured on a glass substrate after thermal conditioning at 125°C for 20 minutes; and

a temperature for 10 wt.% weight loss of 355 to 420°C, as determined by thermogravimetric analyzer (TGA).

15. A curable resin composition comprising:

(a) 10 to 90 wt.% of the visbroken hydrogenated styrenic block copolymer of any of claims 1-3;

(b) 20 to 90 wt.% of a resin selected from the group consisting of epoxy resins, polyphenylene ether resins, cyanate ester resins, benzoxazine resins, phenolic resins, vinyl ester resins, bismaleimide resins, polyester resins, polyamide resins, ionomer resins, aromatic resins, and combinations thereof; and

(c) 0 to 30 wt.% of an additive selected from the group consisting of fillers, curing agents, catalysts, flame retardants, coupling agents, processing aids, stabilizers, and mixtures thereof, based on total weight of the curable resin composition; and

wherein the curable resin composition, after curing, has:

a dielectric constant (Dk) of < 3.0; and

a dissipation factor (Df) of < 0.006 at 10 GHz, both are measured at 10 GHz, according to ASTM D2520.

FIG. 1

FIG. 2

Europäisches
Patentamt

European
Patent Office

Office européen
des brevets

**EUROPEAN SEARCH REPORT**

Application Number

EP 26 15 3722

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 063 416 A1 (KRATON POLYMERS RES BV [NL]) 28 September 2022 (2022-09-28) * paragraph [0074] * ----- | 1-15 | INV.<br>C08F8/50<br>C08L53/02<br>C08F8/46 |
| A | EP 3 381 953 A1 (KRATON POLYMERS US LLC [US]) 3 October 2018 (2018-10-03) * the whole document * ----- | 1-15 | C08F8/42<br>C08L23/20 |

TECHNICAL FIELDS
SEARCHED        (IPC)

C08L
C08F
C08K

The present search report has been drawn up for all claims

| Place of search | Date of completion of the search | Examiner |
|---|---|---|
| Munich | 13 May 2026 | Friebe, Lars |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 26 15 3722

This annex lists the patent family members relating to the patent documents cited in  the above-mentioned European search report.
The members are as contained in the European Patent Office EDP file on
The European Patent Office is in no way liable for these particulars which are merely given for the purpose of information.

13-05-2026

| Patent document cited in search report | | Publication date | Patent family member(s) | | Publication date |
|---|---|---|---|---|---|
| EP 4063416 | A1 | 28-09-2022 | CN | 115124664 A | 30-09-2022 |
| | | | EP | 4063416 A1 | 28-09-2022 |
| | | | JP | 2022146935 A | 05-10-2022 |
| | | | KR | 20220131850 A | 29-09-2022 |
| | | | US | 2022298351 A1 | 22-09-2022 |
| EP 3381953 | A1 | 03-10-2018 | BR | 112014020022 A2 | 20-06-2017 |
| | | | CN | 104379667 A | 25-02-2015 |
| | | | CN | 107057260 A | 18-08-2017 |
| | | | EP | 2817371 A1 | 31-12-2014 |
| | | | EP | 3381953 A1 | 03-10-2018 |
| | | | JP | 6001685 B2 | 05-10-2016 |
| | | | JP | 6321055 B2 | 09-05-2018 |
| | | | JP | 6702917 B2 | 03-06-2020 |
| | | | JP | 2015513584 A | 14-05-2015 |
| | | | JP | 2016128622 A | 14-07-2016 |
| | | | JP | 2018035490 A | 08-03-2018 |
| | | | KR | 20150012237 A | 03-02-2015 |
| | | | TW | 201339268 A | 01-10-2013 |
| | | | TW | 201602279 A | 16-01-2016 |
| | | | US | 2013225020 A1 | 29-08-2013 |
| | | | US | 2014364532 A1 | 11-12-2014 |
| | | | US | 2014364555 A1 | 11-12-2014 |
| | | | US | 2014371377 A1 | 18-12-2014 |
| | | | US | 2016102164 A1 | 14-04-2016 |
| | | | WO | 2013148024 A1 | 03-10-2013 |

EPO FORM P0459

For more details about this annex : see Official Journal of the European Patent Office, No. 12/82